# EUROPEAN PATENT SPECIFICATION

(11) **EP 2 543 743 B1**
(45) Date of publication and mention of the grant of the patent: **29.11.2017**
(21) Application number: 11750656.8
(22) Date of filing: 01.03.2011
(51) Int. Cl.: C21B 5/00, B01D 53/04, C21B 5/06, B01D 53/047, B01D 53/14

(54) **BLAST FURNACE OPERATION METHOD, IRON MILL OPERATION METHOD, AND METHOD FOR UTILIZING A GAS CONTAINING CARBON OXIDES**
BETRIEBSVERFAHREN FÜR EINEN VERBRENNUNGSOFEN, BETRIEBSVERFAHREN FÜR EINE EISENAUFBEREITUNGSANLAGE UND VERFAHREN ZUR VERWENDUNG EINES KOHLENOXIDHALTIGEN GASES
PROCÉDÉ D'EXPLOITATION D'UN HAUT-FOURNEAU, PROCÉDÉ D'EXPLOITATION D'UN BROYEUR DE FERRAILLE, ET PROCÉDÉ D'UTILISATION D'UN GAZ CONTENANT DES OXYDES DE CARBONE

(30) Priority: 22.02.2011 JP 2011035508; 09.02.2011 JP 2011026229; 31.01.2011 JP 2011017404; 30.03.2010 JP 2010078851; 29.03.2010 JP 2010074110; 02.03.2010 JP 2010045392
(43) Date of publication of application: 09.01.2013
(73) Proprietor: JFE Steel Corporation, Tokyo 100-0011 (JP)
(72) Inventor: SAIMA, Hitoshi, Tokyo 100-0011 (JP); MOGI, Yasuhiro, Tokyo 100-0011 (JP); ASANUMA, Minoru, Tokyo 100-0011 (JP); TAKAGI, Katsuhiko, Tokyo 100-0011 (JP); NOUCHI, Taihei, Tokyo 100-0011 (JP); FUJIBAYASHI, Akio, Tokyo 100-0011 (JP)
(74) Representative: Stebbing, Timothy Charles
(86) International application number: PCT/JP2011/054647
(87) International publication number: WO 2011/108546

(56) References cited:
- JP-A- 5 330 802
- JP-A- 54 119 385
- JP-A- 2001 226 295
- JP-A- 2007 056 159
- JP-A- 2007 090 137
- JP-A- 2007 326 053
- JP-A- 2009 120 897

## Description

### Field

The present invention relates to a blast furnace operating method of reforming CO₂ and/or CO separated and collected from mixed gas containing CO₂ and/or CO and using the CO₂ and/or CO as a heat source (fuel) or a reducing agent in the blast furnace, a steelworks operating method of reforming CO₂ and/or CO separated and collected from mixed gas containing CO₂ and/or CO and using the CO₂ and/or CO as a heat source (fuel) or a reducing agent in the steelworks, and a utilization method of carbon oxide-containing gas (mixed gas containing CO₂ or CO₂ and CO). Background

Global warming caused by the increase in CO₂ has been raised as a major international issue, and reduction of emissions thereof has become a global task. Although development of various techniques for separating and collecting CO₂ from generated gas has been attempted, an effective means has not yet been proposed, regarding how to utilize the collected CO₂. A technique of burying collected CO₂ under the soil, that is, so-called CCS (Carbon dioxide Capture and Storage) has been intensively studied mainly in Europe, the United States, and Japan. However, it is difficult to reach public consensus on this method, particularly in Japan, which is a land of earthquakes, from the standpoint of safety after burying CO₂ under the soil. In addition, according to provisional calculations by the Research Institute of Innovative Technology for the Earth (RITE), a value obtained by dividing the amount of CO₂ that can be buried in Japan including adjacent waters by a discharge amount, in other words, the life duration is considered to be as short as about 50 to 100 years. For this reason, it has been considered difficult to employ CCS as a fundamental solution for reducing CO₂ discharge, at least in Japan.

Statistically, about 30% of the CO₂ discharge amount in Japan is discharged in generating electric power, 10% is discharged in manufacturing iron and steel, and the transportation category and livelihood category occupy large percentages of the rest. In electrical power plants, CO₂ is discharged since the chemical energies of coal, petroleum, and natural gas are converted into electric energies by complete oxidation of such fossil fuels. Therefore, CO₂ is inevitably generated by an amount corresponding to the fossil fuel used. However, it is considered that such power generation using fossil fuel will be gradually reduced in the long term since solar power generation, wind power generation, and tidal power generation, which use so-called soft energies, biomass power generation, and nuclear power generation, will become widely used.

On the other hand, in manufacturing iron and steel, CO₂ is generated in various processes, and the maximum generation source is a blast furnace process. The CO₂ generation in the blast furnace process results from reducing iron ore as iron oxide with carbon in a reducing material and removing oxygen in the iron ore. Therefore, it can be said that CO₂ generation is inevitable in manufacturing iron and steel. In the blast furnace process, hot blast at 1000°C or higher is sent from a lower part of the blast furnace, cokes are combusted, heat necessary for reducing and melting iron ore is supplied, reducing gas (CO) is generated, and the iron ore is reduced with the reducing gas to obtain molten iron.

As a method of reducing iron ore, in which no CO₂ is generated, use of hydrogen as reducing gas can be considered. When hydrogen is blown into the blast furnace, a reduction reaction of the iron ore by hydrogen is represented by the following Formula (1). A reduction reaction by CO generated in combustion of cokes is represented by the following Formula (2). That is, since the reduction reaction by hydrogen is an endothermic reaction, there is a concern in that heat necessary for reducing and melting the iron ore is not sufficient since hydrogen conducts heat away from the bottom of the furnace when directly blown into the blast furnace, and thermal compensation of the furnace is required.

Fe₂O₃ + 3H₂ = 2Fe + 3H₂O ΔH = 100.1 kJ/mol (endothermic) (1)

Fe₂O₃ + 3CO = 2Fe + 3CO₂ ΔH = -23.4 kJ/mol (exothermic) (2)

On the other hand, Patent Literature 1 discloses a blast furnace operating method in which hydrocarbon based gas such as LGN is blown in order to reduce a reducing material ratio of cokes in the blast furnace. Patent Literature 2 discloses a technique according to which a part of blast furnace gas is combusted and blown as hot gas into a blast furnace shaft portion for thermal compensation at the upper part of the furnace in the case of aiming for operating the blast furnace at a low reducing material ratio. The Patent Literature also discloses a technique of removing CO₂ in the blast furnace gas as necessary. Patent Literature 3 discloses a method in which the blast furnace gas is caused to react with dimethyl ether in the presence of a catalyst to reform dimethyl ether and CO₂ in the blast furnace gas into CO and hydrogen. Patent Literature 4 discloses a technique according to which the blast furnace gas, mixture of the blast furnace gas and cokes furnace gas, or gas obtained by removing carbon dioxide gas from the blast furnace gas is combusted and introduced into the blast furnace shaft portion. Patent literature 5 discloses blast furnace operating method involving a methanation reaction and cracking hydrogen. The gas produced in the disclosed method is not utilized by blowing back into the blast furnace. Patent literature 6 discloses an ammonia cracking reaction by using a new ammonia cracking catalyst and utilizing the vapour pressure of liquid ammonia.

### Citation List

### Patent Literature

Patent Literature 1: Japanese Patent Application Laid-open No. 2006-233332
Patent Literature 2: Japanese Patent Application Laid-open No. 2008-214735
Patent Literature 3: Japanese Patent Application Laid-open No. 2009-192125
Patent Literature 4: Japanese Patent Application Laid-open No. 2008-214735
Patent Literature 5: Japanese Patent 54119385 A
Patent Literature 6: Japanese Patent 5330802 A

### Summary

### Technical Problem

As described above, CO₂ generation is inevitable in manufacturing iron and steel. For this reason, important tasks are how effectively the generated CO₂ is utilized and how substantially the amount of CO₂ generated is reduced. However, the method in Patent Literature 1 is not designed for effectively utilizing generated CO₂ and substantially reducing the amount of CO₂ generated, although it is possible to reduce the reducing material (cokes) and indirectly reduce the CO₂ amount generated in the blast furnace by blowing LNG into the blast furnace. In addition, the technique in Patent Literature 2 does not substantially reduce the amount of CO₂ generated in the same manner as that in the Patent Literature 1, and there is no description regarding more effective utilization of separated CO₂. Moreover, manufacturing costs of dimethyl ether used in the method in Patent Literature 3 are high since dimethyl ether is obtained by once converting coal, petroleum, or natural gas into CO and H₂, forming a synthetic gas, and further manufacturing from the synthetic gas, energy is input in the manufacturing step, and therefore, there is a problem in that CO₂ is newly generated.

In the steelworks, blast furnace gas, cokes furnace gas, and converter furnace gas are generated as byproducts from the blast furnace, the cokes furnace, and the converter furnace, respectively, and such byproduct gas is utilized as a heat source (fuel) for the heating furnace and the air-heating furnace in the steelworks. On the other hand, generation amount of the blast furnace gas and heat generation amount are lowered in the case of aiming for operating the blast furnace at a low reducing material ratio. In addition, it is possible to reduce a production amount of cokes since only an amount of cokes for the operating at the low reducing material ratio is required, and as a result, the cokes furnace gas is also reduced. Therefore, the heat source (fuel) in the steelworks is generally insufficient in operating at the low reducing material ratio. In addition, the generation amount of the byproduct gas is reduced, and the heat source (fuel) in the steelworks also becomes insufficient, for example, even when operation availability of the blast furnace and the cokes furnace is lowered, when an amount of generated gas becomes smaller due to trouble in facilities, or when a great amount of scrap iron is used for reducing CO₂. When the byproduct gas as a heat source is insufficient as described above, it is necessary to purchase heavy oil, natural gas, or the like, which is fuel containing carbon, from outside.

Patent Literature 4 discloses a method of removing carbon dioxide gas and returning the carbon dioxide gas to the blast furnace shaft portion. However, this method exerts low effectiveness unless nitrogen rather than carbon dioxide gas is removed, and moreover nitrogen in the blast furnace gas increases by an amount corresponding to circulated and introduced nitrogen, and the heating value of the blast furnace gas is reduced. Basically, the blast furnace gas has a small heating value of 1000 kcal/m³ or less and is typically used as fuel gas by mixing with another gas having a large heating value. The decrease in the heating value of the blast furnace gas brings about a negative effect such as necessity of increased mixture ratio of gas of a large heating value, which results in an increase in the discharge amount of carbon dioxide gas. As described above, CO₂ generation is inevitable in manufacturing iron and steel. In addition, CO is simultaneously generated, and CO is changed into CO₂. For this reason, important tasks are how effectively the mixed gas containing generated CO₂ or CO is reused and how substantially the amount of CO₂ generated is reduced.

The present invention has been made in view of the above problems, and an object of the present invention is to provide a blast furnace operating method in which generated CO₂ and/or CO can effectively be utilized, and the amount of CO₂ generated can substantially be reduced. In addition, another object of the present invention is to provide a steelworks operation method in which generated CO₂ and/or CO can effectively be utilized, the amount of CO₂ generated can substantially be reduced, and the byproduct gas can be compensated even when the byproduct gas as a heat source in the steelworks is insufficient. Moreover, another object of the present invention is to provide an operating method of a blast furnace or steelworks in which substantially reduce the amount of CO₂ generated in the blast furnace can substantially be reduced by effectively utilizing CO₂ and/or CO discharged from the blast furnace, in particular. Furthermore, another object of the present invention is to provide an operation method of a blast furnace or steelworks in which a hydrogen purchase amount necessary for reforming CO₂ and/or CO can be reduced, allowing the performance at lower costs.

In addition, another object of the present invention is to provide blast furnace operating method in which the amount of CO₂ generated can substantially be reduced by reforming generated CO₂ and effectively utilizing CO₂ in the blast furnace, allowing the performance at low cost. Moreover, another object of the present invention is to provide a steelworks operating method in which the amount of CO₂ generated can substantially be reduced by reforming generated CO₂ and effectively utilizing CO₂ in the steelworks and the byproduct gas can be compensated even when the byproduct gas as a heat source in the steelworks is insufficient, allowing the performance at low cost. Furthermore, another object of the present invention is to provide an operating method of a blast furnace or steelworks in which CO₂ discharged from the blast furnace can be reformed and effectively be utilized, in particular.

In addition, another object of the present invention is to provide a utilization method of carbon oxide-containing gas in which carbon oxide-containing gas (mixed gas containing CO₂ or CO₂ and CO) can effectively be utilized.

### Solution to Problem

As a result of intensive study in order to solve the above problems in the related art, the present inventors discovered a new operating method of a blast furnace or steelworks in which it is possible to substantially reduce the amount of CO₂ generated by separating and collecting CO₂ and/or CO from mixed gas (preferably, blast furnace gas) containing CO₂ and/or CO, converting (reforming) the CO₂ and/or CO into CH₄, and blowing the CH₄ as a heat source (fuel) and a reducing agent into the blast furnace, or using the CH₄ as a heat source (fuel) in a facility such as a heating furnace or an air-heating furnace in the steelworks. At the same time, an operating method has been discovered which can be performed at lower cost by utilizing reaction heat generated in converting CO₂ and/or CO into CH₄ to manufacture hydrogen in performing the operating method. That is, the gist of the present invention is as follows.

A blast furnace operating method including: Step (A1) for separating and collecting CO₂ and/or CO from mixed gas containing CO₂ and/or CO; Step (A2) for adding hydrogen to CO₂ and/or CO separated and collected in Step (A1) and converting CO₂ and/or CO into CH₄; Step (A3) for separating and removing H₂O from gas obtained after Step (A2); and Step (A4) for blowing gas obtained after Step (A3) into a blast furnace.

A steelworks operating method including: Step (A1) for separating and collecting CO₂ and/or CO from mixed gas containing CO₂ and/or CO; Step (A2) for adding hydrogen to CO₂ and/or CO separated and collected in Step (A1) and converting CO₂ and/or CO into CH₄; and Step (A3) for separating and removing H₂O from gas obtained after Step (A2), wherein gas obtained after Step (A3) is used as fuel and/or a reducing agent in the steelworks.

In addition, as a result of intensive study in order to solve the above problems in the related art, the present inventors discovered a new operating method in which it is possible to substantially reduce the amount of CO₂ generated by separating and collecting CO₂ from mixed gas (preferably, blast furnace gas) containing CO₂, converting (reforming) CO₂ into CO, and using CO as fuel in a facility such as a heating furnace or an air-heating furnace in the steelworks or blowing CO as a reducing agent into the blast furnace. That is, the gist of the present invention is as follows.

A blast furnace operating method including: Step (B1) for separating and collecting CO₂ from mixed gas containing CO₂; Step (B2) for adding a hydrogen-based reducing agent to CO₂ separated and collected in Step (B1) and converting CO₂ into CO; Step (B3) for separating and removing H₂O or H₂O and N₂ from gas obtained after Step (B2); and Step (B4) for blowing gas obtained after Step (B3) into a blast furnace.

A steelworks operating method including: Step (B1) for separating and collecting CO₂ from mixed gas containing CO₂; Step (B2) for adding a hydrogen-based reducing agent to CO₂ separated and collected in Step (B1) and converting CO₂ into CO; and Step (B3) for separating and removing H₂O or H₂O and N₂ from gas obtained after Step (B2), wherein gas obtained after Step (B3) is used as fuel and/or a reducing agent in facilities in the steelworks.

Furthermore, as a result of intensive study in order to solve the above problems in the related art, the present inventors found out that it is possible to substantially reduce CO₂ by collecting CO₂ generated in the steel industry or other industries, reducing the CO₂ and reusing the CO₂ as CO in the blast furnace. That is, the present inventors conceived an idea that blast furnace gas or converter furnace gas, which is carbon oxide-containing gas (mixed gas containing CO₂ or CO₂ and CO) generated in the steelworks, is collected, carbon oxide (CO₂ or CO₂ and CO) is separated from the collected carbon oxide-containing gas, CO₂ in the separated carbon oxide is reduced with a hydrocarbon-based reducing agent and converted into CO, and thus obtained CO (CO obtained by reducing CO₂ separated from the carbon oxide-containing gas and/or CO obtained by separating from the carbon oxide-containing gas) is reused in the blast furnace. Based on the above idea, the present invention is characterized as follows.

A utilization method of carbon oxide-containing gas in which, CO₂ or CO₂ and CO are separated from mixed gas containing CO₂ or CO₂ and CO, the separated CO₂ or CO₂ and CO are then brought into contact with a hydrocarbon-based reducing agent to be transformed into CO and hydrogen, and the obtained CO is introduced into a blast furnace. Advantageous Effects of Invention

According to the operating method of the blast furnace or the steelworks of the present invention, CO₂ and/or CO is separated and collected from mixed gas containing CO₂ and/or CO and converted (reformed) into CH₄, and CH₄ is blown as a heat source (fuel) and a reducing agent into the blast furnace or used as a heat source (fuel) in a heating furnace or an air-heating furnace, which is a facility in the steelworks, and therefore, it is possible to implement at low cost the operations of the entire blast furnace and the steelworks effectively utilizing CO₂ and/or CO and to reduce the amount of CO₂ generated. In addition, it is possible to appropriately compensate for shortage when byproduct gas as a heat source in the steelworks is insufficient due to the implementation of the operation of the blast furnace at a low reducing material ratio or other reasons.

Furthermore, it is possible to implement the present invention at lower cost by utilizing reaction heat generated in converting CO₂ and/or CO into CH₄ for producing hydrogen and using produced hydrogen in the above converting (reforming) step. In addition, it is possible to enhance an energy efficiency in the system and to achieve energy saving in the entire process by utilizing the reaction heat as a heat source, producing hydrogen by a dehydrogenation reaction of organic hydride, and setting a reaction pressure in the dehydrogenation reaction step to be higher than a reaction pressure in a methanation reaction step for converting CO₂ and/or CO into CH₄.

According to the operating method of the blast furnace or the steelworks of the present invention, CO₂ is separated and collected from mixed gas containing CO₂ and converted (reformed) into CO, and the CO is utilized as fuel in a facility such as a heating furnace or an air-heating furnace in the steelworks, or blown as a reducing agent into the blast furnace, and therefore, it is possible to implement at low cost the operations of the entire blast furnace and the steelworks effectively using CO₂ and to reduce the amount of CO₂ generated. In addition, it is possible to appropriately compensate for shortage when byproduct gas as a heat source in the steelworks is insufficient due to the implementation of the operation of the blast furnace at a low reducing material ratio or other reasons.

According to the utilization method of carbon oxide-containing gas of the present invention, it is possible to efficiently reuse carbon oxide-containing gas (mixed gas containing CO₂ or CO₂ and CO) and to substantially suppress generation of CO₂.

### Brief Description of Drawings

FIG. 1 is an explanatory diagram illustrating an embodiment of a facility where Step (A2) is performed.
FIG. 2 is an explanatory diagram illustrating an embodiment of a facility where Step (A2) and Step (A5) are performed.
FIG. 3 is an explanatory diagram illustrating another embodiment of the facility where Step (A2) and Step (A5) are performed.
FIG. 4 is an explanatory diagram illustrating another embodiment of the facility where Step (A2) and Step (A5) are performed.
FIG. 5 is an explanatory diagram illustrating another embodiment of the facility where Step (A2) and Step (A5) are performed.
FIG. 6 is an explanatory diagram illustrating another embodiment of the facility where Step (A2) and Step (A5) are performed.
FIG. 7 is an explanatory diagram illustrating another embodiment of the facility where Step (A2) and Step (A5) are performed.
FIG. 8 is an explanatory diagram illustrating another embodiment of the facility where Step (A2) and Step (A5) are performed.
FIG. 9 is an explanatory diagram illustrating an embodiment of a method including Step (A5) for producing hydrogen from organic hydride.
FIG. 10 is an explanatory diagram illustrating a utilization aspect (gas processing flow) in the case of using blast furnace gas as mixed gas in the blast furnace operating method according to the first embodiment of the present invention.
FIG. 11 is an explanatory diagram illustrating another utilization aspect (gas processing flow) in the case of using blast furnace gas as mixed gas in the blast furnace operating method according to the first embodiment of the present invention.
FIG. 12 is an explanatory diagram illustrating a utilization aspect (gas processing flow) in the case of using blast furnace gas as mixed gas in the blast furnace operating method according to a second embodiment of the present invention.
FIG. 13 is an explanatory diagram illustrating a utilization aspect (gas processing flow) in the case of using blast furnace gas as mixed gas in the steelworks operating method according to the second embodiment of the present invention.
FIG. 14 is a diagram illustrating an example of a utilization method of carbon oxide-containing gas according to the present invention.
FIG. 15 is a diagram illustrating an example of a utilization method of carbon oxide-containing gas according to the present invention.
FIG. 16 is a diagram illustrating an example of a utilization method of carbon oxide-containing gas according to the present invention.

### Description of Embodiments

### First Embodiment

The blast furnace operating method according to the first embodiment of the present invention includes Step (A1) for separating and collecting CO₂ and/or CO from mixed gas containing CO₂ and/or CO, Step (A2) for adding hydrogen to CO₂ and/or CO separated and collected in Step (A1) and converting CO₂ and/or CO into CH₄, Step (A3) for separating and removing H₂O from the gas obtained after Step (A2), and Step (A4) for blowing the gas obtained after Step (A3) into a blast furnace. More preferably, the blast furnace operating method includes Step (A5) for producing hydrogen by using reaction heat generated in Step (A2), and at least a part of hydrogen produced in Step (A5) is preferably used in Step (A2).

CH₄ blown into the blast furnace in Step (A4) is converted into a reducing agent (reducing gas) by a reaction of the following Formula (3) in the blast furnace.

CH₄ + 1/20₂ = CO + 2H₂ ΔH = -8.5 kJ/mol (exothermic) (3)

The above Formula (3) represents an exothermal reaction, and the generated heat is supplied as heat necessary for reducing iron ore. The generated reducing gas reduces the iron ore as represented by the following Formula (4).

Fe₂O₃ + CO + 2H₂ = 2Fe + CO₂ + 2H₂O ΔH = 58.9 kJ/mol (endothermic) (4)

Since combustion heat of CH₄ can also be used in reducing and melting the iron ore in the blast furnace as described above, thermal compensation to the lower part of the blast furnace is not required much as compared with that required for reducing the iron ore by hydrogen as represented above by Formula (1).

Any kind of mixed gas can be used as long as the mixed gas contains CO₂ and/or CO. Although representative examples of the mixed gas generated in a process for manufacturing iron include blast furnace gas and a converter furnace gas, the present invention is not limited thereto, and mixed gas generated in another industrial field may be used. Although it is desired that a CO₂ concentration of the mixed gas be high in order to effectively separate CO₂, the mixed gas containing 15 vol% or more CO₂ is preferably used on the assumption of blast furnace gas, converter furnace gas, and discharged gas in heating furnace combustion.

The present invention is most useful when blast furnace gas is used as the mixed gas of a raw material, and it is possible to reduce the CO₂ discharge amount from the blast furnace by reforming CO₂ and CO contained in the blast furnace gas into CH₄ and cycling the CH₄ as a heat source and a reducing agent in the blast furnace. As general compositions of the blast furnace gas, about 15 to 25 vol% of CO₂, about 15 to 25 vol% of CO, about 45 to 55 vol% of N₂, and about 0 to 5 vol% of hydrogen are contained. When the blast furnace gas is used as the mixed gas of the raw material, a part of or the entire blast furnace gas generated from the blast furnace may be used. For example, when 10 vol% of the blast furnace gas is used, the CO₂ discharge amount can be reduced by approximately 12%.

Hereinafter, description will be given of Steps (A1) to (A4) and also, Step (A5) constituting the blast furnace operating method according to the first embodiment of the present invention.

### Step (A1)

The mixed gas as raw material gas is mixed gas containing CO₂ and/or CO, and CO₂ and/or CO is separated and collected from the mixed gas in Step (A1). Although it is preferable that CO₂ and CO be separated and collected from the mixed gas and converted (reformed) into CH₄ in Step (2) in the case of the mixed gas containing CO₂ and CO, the present invention is not limited thereto, and only CO₂ may be separated and collected from the mixed gas containing CO₂ and CO.

As methods of separating and collecting CO₂ and CO from the mixed gas, arbitrary methods may be respectively used. When CO₂ and CO are respectively separated and collected from the mixed gas, CO may be separated and collected after CO₂ is separated and collected, and vice versa. CO₂ and CO may be separated and collected at the same time. As methods of separating and collecting CO₂ from the mixed gas, for example, a method of liquefying or solidifying CO₂ by pressurizing or cooling, a method of separating and collecting CO₂ by heating or depressurizing after causing caustic soda, amine, etc., which is basic aqueous solution, to absorb CO₂, a method of separating and collecting CO₂ by heating or depressurizing after causing activated carbon, zeolite, etc. to adsorb CO₂, and a method of separating and collecting CO₂ by a CO₂ separating film have been known, and an arbitrary method including one of the above methods can be employed.

As methods of separating and collecting CO from the mixed gas, for example, a method of separating and collecting CO by heating or depressurizing after causing copper/activated carbon, copper/alumina, or copper/zeolite, which is an example of adsorbent, to adsorb CO and a method of separating and collecting CO by heating or depressurizing after causing absorbing solution containing copper as a main component to absorb CO have been known, and an arbitrary method including one of the above methods can be employed. CO₂ and CO may be separated and collected at the same time by performing the method of separating and collecting CO₂ and the method of separating and collecting CO as described above at the same time or in a composite manner. Although gas purity of CO₂ and CO separated and collected from the mixed gas is not particularly limited, purity of 80 vol% or higher is preferable from the standpoint of downsizing a reactor used in the reforming step.

### Step (A2)

In Step (A2), hydrogen is added to CO₂ and/or CO separated and collected in Step (A1), and CO₂ and/or CO is converted (reformed) into CH₄. As a method of adding hydrogen to CO₂ and/or CO and reforming CO₂ and/or CO into CH₄, a known method of reforming CO₂ and/or CO by using a specific catalyst can be employed. A reduction reaction of CO₂ by hydrogen is represented by the following Formula (5), and the reduction reaction of CO by hydrogen is represented by the following Formula (6), respectively.

CO₂ + 4H₂ = CH₄ + 2H₂O ΔH = -39.4 kJ/mol (exothermic) (5)

CO + 3H₂ = CH₄ + H₂O ΔH = -49.3 kJ/mol (exothermic) (6)

The above Formulae (5) and (6) represent exothermal reactions. For Formula (5), a low temperature is advantageous in view of equilibrium, and CO₂ equilibrium conversion at 300°C is about 95%. Even for Formula (6), a low temperature is advantageous in view of equilibrium, and CO equilibrium conversion at 300°C is about 98%. For these reactions, a methanation catalyst which is typically used is available. Specifically, CO₂ and CO can be reformed into CH₄ by using iron, Ni, Co, Ru, etc. which is a transition metal-based catalyst. Particularly, a Ni-based catalyst is highly activated, has high heat resistance, and can be used at a temperature up to about 500°C, which is particularly preferable. The iron ore may be used as a catalyst, and particularly, high combined-water content ore can be preferably used as a catalyst since the specific surface area thereof increases when the combined-water is dehydrated.

A methanation reactor is preferably operated at an inlet pressure of about 0.2 to 1 MPa, and more preferably at an inlet pressure of about 0.3 to 0.6 MPa in consideration of pressure loss in a catalytic bed and pressure loss in a heat exchanger, which will be described later, when the heat exchanger is installed on the downstream side of the methanation reactor. When a reaction pressure at the methanation reactor is excessively low, it becomes necessary to install a suction blower on the downstream side of the methanation reactor due to pressure loss, and power consumption increases. On the other hand, when the reaction pressure at the methanation reactor is excessively high, power consumption for raising pressure of CO₂ and/or CO and H₂ up to the reaction pressure increases.

When CO₂ and CO are reformed into CH₄, CO₂ and CO may be reformed separately or reformed in a state where CO₂ and CO are mixed. A supply source of hydrogen to be added to CO₂ and/or CO can be arbitrary, and for example, hydrogen generated by decomposing ammonia, which is a hydrogenous compound, can be used. The decomposition of ammonia is represented by the following Formula (7).

NH₃ = 1/2N₂ + 3/2H₂ ΔH = 11.0 kJ/mol (endothermic) (7)

The above Formula (7) represents equilibrium (7) conversion of about 95% at 400°C. Ammonia can be decomposed into nitrogen and hydrogen by using iron, Ni, or Co, etc. which is a transition metal-based catalyst. The iron ore may be used as a catalyst, and particularly, high combined-water content ore can be preferably used as a catalyst since the specific surface area thereof increases when the combined-water is dehydrated. Ammonia is generated in manufacturing cokes by subjecting coal to destructive distillation (an ammonia generation amount is about 3.3 Nm³/t-coal) and is collected as liquid ammonia or ammonium sulfate in a current situation. When ammonia can be used as a source of hydrogen in the present invention, necessity to obtain hydrogen outside the steelworks is eliminated, or the amount of hydrogen to be obtained outside the steelworks can be reduced.

Examples of other hydrogenous compounds for obtaining hydrogen include cokes furnace gas. In order to obtain hydrogen from the cokes furnace gas, a method of separating and collecting hydrogen in the cokes furnace gas by PSA (physical adsorption) or the like or a method of reforming (partial oxidation) hydrocarbon in the cokes furnace gas and separating and collecting hydrogen from the reformed gas by PSA (physical adsorption) or the like can be employed. Biomass may be subjected to partial oxidation, and hydrogen may be separated and collected from the obtained gas by PSA (physical adsorption) or the like. When ammonia, etc., which is a hydrogenous compound, is decomposed to obtain hydrogen, gas components (nitrogen in the case of ammonia) other than hydrogen after the decomposition is separated and removed, and the hydrogen is supplied to Step (A2). Examples of hydrogen obtained from other supply sources include hydrogen produced by subjecting natural gas, etc., which is hydrocarbon, to water vapor reforming, hydrogen obtained by gasifying liquefied hydrogen, hydrogen produced by dehydrogenating organic hydride, and hydrogen produced by electrodepositing water.

In order to add hydrogen to CO₂ and/or CO and reform CO₂ and/or CO into CH₄ by using a catalyst (reform CO₂, CO in a separate manner or in a mixed state), CO₂ and/or CO to which hydrogen has been added is typically introduced into a reactor which is filled with the catalyst, and a reaction of converting (reforming) CO₂ and/or CO into CH₄ is caused. As a reactor, a fixed-bed reactor, a fluidized-bed reactor, or an entrained-bed reactor can be used. In accordance with a type of such a reactor, physical nature of the catalyst is appropriately selected.

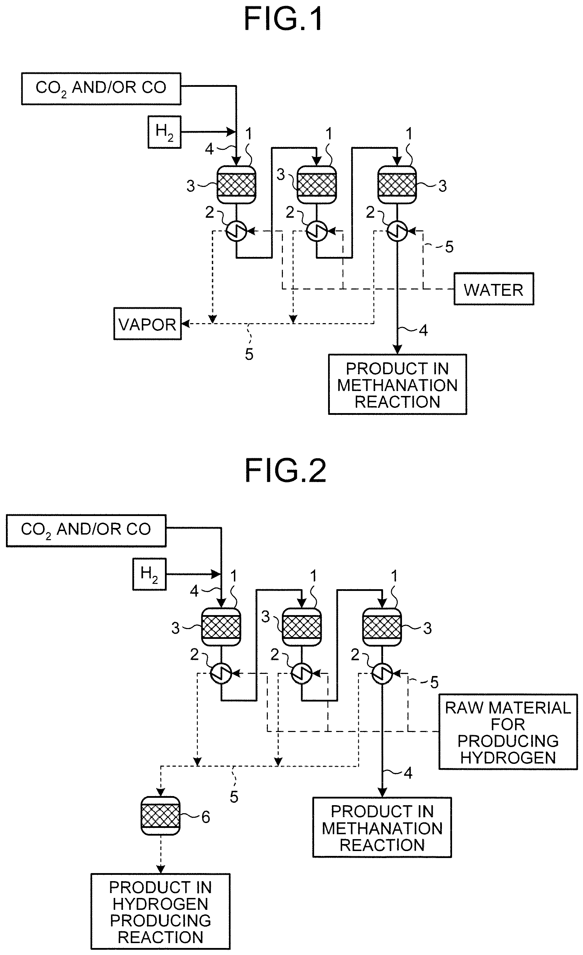

Particularly, an insulated fixed-bed reactor filled with the Ni catalyst, etc. which is excellent in heat resistance has achieved many industrial accomplishments as a methanation reactor. FIG. 1 shows an embodiment of a facility where Step (A2) is performed, and a plurality of reactors 1 (methanation reactors) filled with catalyst 3 (Ni-based catalyst, etc.) are arranged in series in a gas flow path 4. These reactors 1 are insulated fixed-bed reactors. CO₂ and/or CO to which hydrogen has been added is sequentially introduced into the plurality of reactors 1, and a reaction of converting (reforming) CO₂ and/or CO into CH₄ occurs in each of the reactors 1. A heat exchanger 2 is arranged in the gas flow path 4 on the downstream side of each reactor 1, and reaction heat (gas sensible heat) of the methanation reaction in each reactor 1 is collected by the heat exchanger 2. In this embodiment, water is used as a heat carrier (5 represents a heat carrier flow path), and the heat exchanger 2 is caused to generate vapor to perform heat recovery.

In order to effectively cause a methanation reaction while appropriately controlling a reaction temperature, it is preferable that an amount of the catalyst for filling one reactor 1 be reduced, that the reaction temperature be controlled while heat recovery is performed by the heat exchanger 2 installed on the downstream side of each reactor 1, and that the methanation reaction be completed with such a reactor group in which several sets of the reactor 1 and the heat exchanger 2 are arranged in series, as in this embodiment.

An amount of hydrogen to be mixed with CO₂ and/or CO is equal to or larger than a stoichiometric proportion, and specifically, the amount of hydrogen is preferable in the stoichiometric proportion with respect to CO₂ and/or CO to range from 1 to 1.2. When the stoichiometric proportion is less than 1, there is a concern in which not only amount of CO₂ and/or CO remaining in an unreacted state increases, but also that carbonaceous matters are precipitated on the methanation catalyst, thereby shortening the life duration of the catalyst. On the other hand, when the stoichiometric proportion exceeds 1.2, H₂ remaining in an unreacted state increases, and an economic efficiency is lowered, while no adverse effect on the reaction can be observed.

### Step (A3)

In Step (A3), H₂O is separated and removed from the gas obtained after the above Step (A2) (hereinafter, referred to as reformed gas). When CO₂ and/or CO is reformed into CH₄ by hydrogen, H₂O is generated. When H₂O is introduced into the blast furnace, cokes in the blast furnace are consumed, and on the contrary, a CO₂ discharge amount increases. Accordingly, it is necessary to separate and remove H₂O from the reformed gas. As a method of separating and removing H₂O from the reformed gas, a cooling method or an adsorption method can be applied. According to the cooling method, the reformed gas is cooled down to a temperature which is equal to or lower than a dew-point temperature, and H₂O is condensed and removed. The dew-point temperature depends on H₂O concentration of the reformed gas, and since typically if the reformed gas is cooled down to a temperature which is equal to or lower than 30°C, H₂O can be appropriately condensed and removed and concentration becomes at the same level as a moisture concentration of blast air blown into the blast furnace, therefore, it is preferable for the blast furnace operation. According to the adsorption method, adsorbent for dehumidification such as silica gel is used, and a method of repeating adsorption and reproduction in an adsorption column or a honeycomb rotor method of sequentially repeating reproduction and adsorption while rotating adsorbent cast in a honeycomb shape can be appropriately employed. As a method of cooling the reformed gas, heat exchange may be performed with the reformed gas (typically, ambient temperature) in the course of being supplied to the blast furnace after Step (A3).

Although no problem occurs in particular in the present invention even when a part of hydrogen added to reform CO₂ and/or CO in the above Step (A2) remains in an unreacted state (typically, a part of added hydrogen remains in an unreacted state in the reformed gas) in the reformed gas, the remaining hydrogen may be separated and collected to be reused in Step (A2). In order to separate and collect hydrogen from the reformed gas, a PSA method or the like of adsorbing and separating gas other than H₂ with adsorbent may be employed. When CO₂ and/or CO (CO₂ in particular) which has not been reformed into CH₄ in the above Step (A2) remains in the reformed gas, CO₂ and/or CO may be separated and removed by the aforementioned method. As described above, the reformed gas typically becomes gas mainly containing CH₄ or gas substantially containing only CH₄.

### Step (A4)

In Step (A4), the reformed gas obtained after Step (A3) is blown as a heat source and a reducing agent into the blast furnace. The reformed gas is preferably blown into the blast furnace while a gas temperature is raised in consideration of the blast furnace operation, and therefore, heat exchange may be performed with the reformed gas at a high temperature immediately after Step (A2) to raise the temperature, and the reformed gas may then be blown into the blast furnace. Another heat source may be used to raise the temperature of the reformed gas by indirect heating. Although the reformed gas is typically blown into the blast furnace through a tuyere, the present invention is not limited thereto. When the reformed gas is blown from the tuyere, an injection lance is typically installed at the tuyere and the reformed gas is blown from the injection lance.

### Step (A5)

Step (A5) is designed for collecting and utilizing reaction heat generated in Step (A2) to produce hydrogen, and in the present invention, at least a part of hydrogen produced in Step (A5) is used in Step (A2). FIGS. 2 to 8 show an embodiment of facilities where Steps (A2) and (A5) are performed. As represented by the aforementioned Formulae (5) and (6), reaction heat generated in converting CO₂ and/or CO into CH₄ in Step (A2) is extremely high. Particularly, using a catalyst such as Ni-based catalyst, which has high heat resistance, and an insulated methanation reactor, it is controlled such that the gas temperature on the output side of the methanation reactor turns about 400 to 500°C, and heat recovery is performed from such reformed gas, it is possible to effectively utilize the heat in producing hydrogen, which is typically a significant endothermic reaction.

Although the following methods can be exemplified as a method of producing hydrogen according to an embodiment of Step (A5), the present invention is not limited thereto.
(1) A method of producing hydrogen by a dehydrogenation reaction of hydride of monoaromatic compound and/or polyaromatic compound (hereinafter, these are collectively referred to as "organic hydride" in some cases for convenience of explanation) and utilizing reaction heat, which is generated in Step (A2) as a heat source for the dehydrogenation reaction
(2) A method of producing hydrogen by decomposing ammonia while using reaction heat generated in Step (A2) as a heat source
(3) A method of producing hydrogen by subjecting hydrocarbon to water vapor reforming and utilizing reaction heat, which is generated in Step (A2), as a heat source for preheating hydrocarbon as a raw material
(4) A method of producing hydrogen by subjecting hydrocarbon to water vapor reforming, generating vapor by reaction heat which is generated in Step (A2), and utilizing the vapor as water vapor for the reforming reaction
(5) A method of generating vapor by reaction heat which is generated in Step (A2), generating electric power with the vapor, and producing hydrogen by electrodepositing water with the electric power
(6) A method of generating vapor by reaction heat which is generated in Step (A2), generating electric power with the vapor, and producing hydrogen by separating hydrogen from hydrogen-containing gas based on a PSA (Pressure Swing Method) using the electric power

For example, this method includes a method of separating hydrogen from the cokes furnace gas and a method of separating hydrogen from gas obtained by gasifying biomass or plastic.

A reactor for producing hydrogen in which a dehydrogenation reaction of organic hydride is performed, a reactor for producing hydrogen in which ammonia is decomposed, and a reactor for producing hydrogen in which hydrocarbon is subjected to water vapor reforming are used in the above method (1), the above method (2), and the above method (3), respectively, and the reaction heat which is generated in Step (A2) is utilized as the heat source in these reactors for producing hydrogen. FIGS. 2 to 6 show some embodiments of facility configurations preferable for performing the above methods (1) to (3). Among the aforementioned methods, organic hydride as a raw material for producing hydrogen in the above method (1) is liquid at an ambient temperature, and it is preferable to use such a raw material for producing hydrogen which is liquid at the ambient temperature from the standpoint of saving energy in the process of producing hydrogen. This is because pressure of liquid can be raised with significantly smaller power as compared with that for gas when the pressure of the raw material for producing hydrogen is raised and the material is supplied to the reactor for producing hydrogen.

According to the embodiment in FIG. 2, a plurality of reactors 1 (methanation reactors) filled with the catalyst 3 (Ni-based catalyst) are arranger in series in a gas flow path 4, a heat exchanger 2 is arranged in the gas flow path 4 on the downstream side of each reactor 1, and the heat exchanger 2 (5 is a heat carrier flow path 5) recovers reaction heat (gas sensible heat) of a methanation reaction in each reactor 1, in the same manner in the embodiment in FIG. 1. According to this embodiment, a raw material for producing hydrogen, namely organic hydride in the above method (1), ammonia in the above method (2), or hydrocarbon in the above method (3) is respectively used as a heat carrier, the heat exchanger 2 directly performs heat exchange with the raw material for producing hydrogen to preheat the raw material for producing hydrogen. The preheated raw material for producing hydrogen is introduced into a reactor 6 for producing hydrogen, and hydrogen is produced based on any of the above methods (1) to (3). Although the methanation reaction heat is effective for preheating the raw material hydrocarbon since a water vapor reforming reaction temperature is typically high in the above method (3), it is preferable to supply a heat source at a higher temperature in order to perform the water vapor reforming reaction at a higher reaction rate.

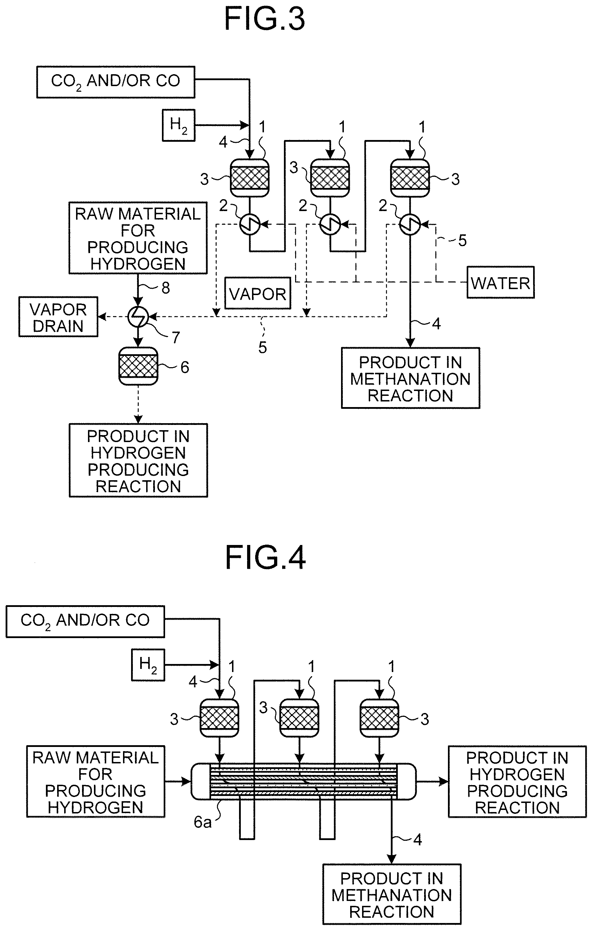

According to the embodiment in FIG. 3, a plurality of reactors 1 (methanation reactors) filled with the catalyst 3 (Ni-based catalyst) are arranged in series in a gas flow path 4, a heat exchanger 2 is arranged in the gas flow path 4 on the downstream side of each reactor 1, and the heat exchanger 2 (5 represents a heat carrier flow path) recovers reaction heat (gas sensible heat) of a methanation reaction in each reactor 1, in the same manner as in the embodiment in FIG. 1. According to this embodiment, water is used as a heat carrier, the heat exchanger 2 generates vapor to perform the heat recovery, and a heat exchanger 7 further causes heat exchange of the vapor with a raw material for producing hydrogen (8 represents a flow path of the raw material for producing hydrogen) to preheat the raw material for producing hydrogen. The preheated raw material for producing hydrogen is introduced into the reactor 6 for producing hydrogen, and hydrogen is produced based on any of the above methods (1) to (3).

According to the embodiment in FIG. 4, a plurality of reactors 1 (methanation reactors) filled with the catalyst 3 (Ni-based catalyst) are arranged in series in a gas flow path 4 in the same manner as in the embodiment in FIG. 1. The gas flow path 4 on the downstream side of each reactor 1 passes through the inside of a reactor 6a for producing hydrogen (shell-and-tube reactor), and sensible heat of the gas flowing through the gas flow path 4 is utilized as a heat source for the reactor 6a for producing hydrogen. In the reactor 6a for producing hydrogen into which the raw material for producing hydrogen is introduced, hydrogen is produced based on any of the above methods (1) to (3). Although flowing directions of the raw material for producing hydrogen and gas flow path 4 are typically set to countercurrent flow, the flowing directions may also be co-current flow. Although the shell-and-tube type is exemplified as the reactor 6a for producing hydrogen in this embodiment, the present invention is not limited thereto.

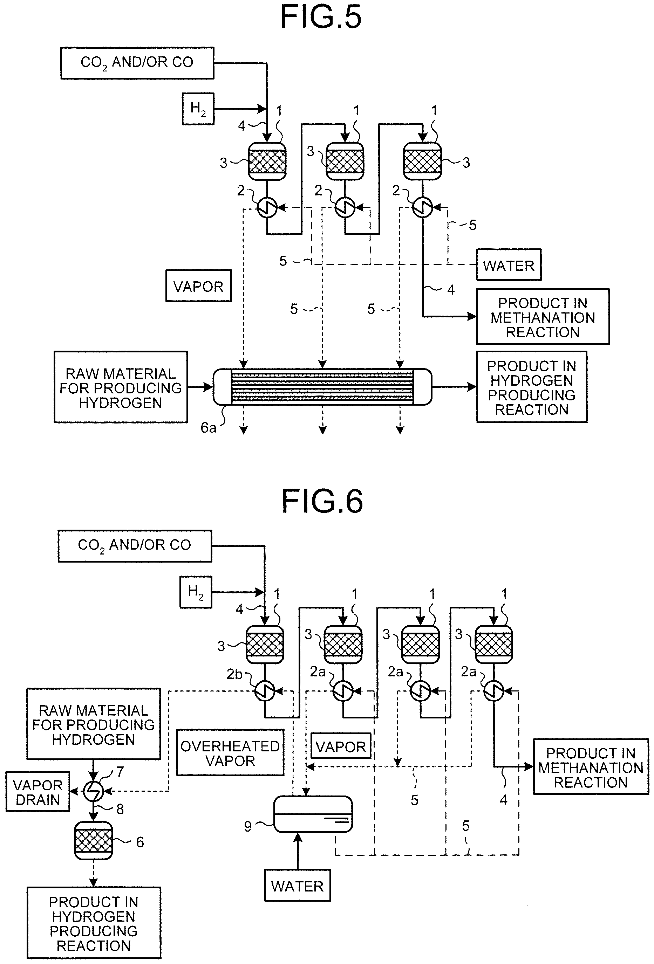

According to the embodiment in FIG. 5, a plurality of reactors 1 (methanation reactors) filled with the catalyst 3 (Ni-based catalyst) are arranged in series in a gas flow path 4, heat exchanger 2 is arranged in the gas flow path 4 on the downstream side of each reactor 1, and the heat exchanger 2 (5 represents a heat carrier flow path) recovers reaction heat (gas sensible heat) of a methanation reaction in each reactor 1, in the same manner as in the embodiment in FIG. 1. According to this embodiment, water is used as a heat carrier, and the heat exchanger 2 generates vapor for the heat recovery. The heat carrier flow path 5, through which the vapor passes, passes through the inside of a reactor 6a for producing hydrogen (shell-and-tube reactor), and sensible heat of the vapor is utilized as a heat source for the reactor 6a for producing hydrogen. In the reactor 6a for producing hydrogen into which the raw material for producing hydrogen is introduced, hydrogen is produced based on any of above methods (1) to (3). Although the flowing directions of the raw material for producing hydrogen and the gas flow path 4 are typically set to countercurrent flow, the flowing directions may also be co-current flow. Although the shell-and-tube reactor type is exemplified as the reactor 6a for producing hydrogen in this embodiment, the present invention is not limited thereto.

According to the embodiment in FIG. 6, a plurality of reactors 1 (methanation reactors) filled with the catalyst 3 (Ni-based catalyst) are arranged in series in a gas flow path 4, a heat exchanger 2 is arranged in the gas flow path 4 on the downstream side of each reactor 1, and the heat exchanger 2 (5 represents a heat carrier flow path) recovers reaction heat (gas sensible heat) of a methanation reaction in each reactor 1, in the same manner as in the embodiment in FIG. 1. According to this embodiment, water is used as a heat carrier, the heat exchanger 2 generates vapor for the heat recover, water is caused to flow from a steam drum 9 through the heat carrier flow path 5 to a heat exchangers 2a (the heat exchangers 2a arranged on the downstream side of the reactors 1) provided for one reactor or two or more reactors 1 on the downstream side among the plurality of reactors arranged in series in the gas flow path 4, and the heat exchangers 2a generate vapor for the heat recovery. The vapor is sent to a heat exchangers 2b (heat exchangers 2b arranged on the downstream side of the reactors 1) provided for one reactor 1 or two or more reactors 1 on the upstream side after liquid components thereof are removed after passing through the steam drum 9, and the heat exchangers 2b generate overheated vapor for heat recovery. In relation to the heat exchangers 2, three heat exchangers 2a and one heat exchanger 2b are arranged in this embodiment. The heat exchanger 7 performs heat exchange of the overheated vapor, which has been generated by the heat exchangers 2b, with the raw material for producing hydrogen (8 represents a flow path of the raw material for producing hydrogen), and the raw material for producing hydrogen is preheated. The preheated raw material for producing hydrogen is introduced into the reactor 6 for producing hydrogen, and hydrogen is produced based on any of the above methods (1) to (3). The method of generating overheated vapor with the reaction heat in Step (A2) and using the overheated vapor as a heat source for preheating the raw material for producing hydrogen is particularly preferable due to excellent thermal efficiency. A mechanism for generating the overheated vapor shown in FIG. 6 may also be applied to the facility according to the embodiment in FIG. 5.

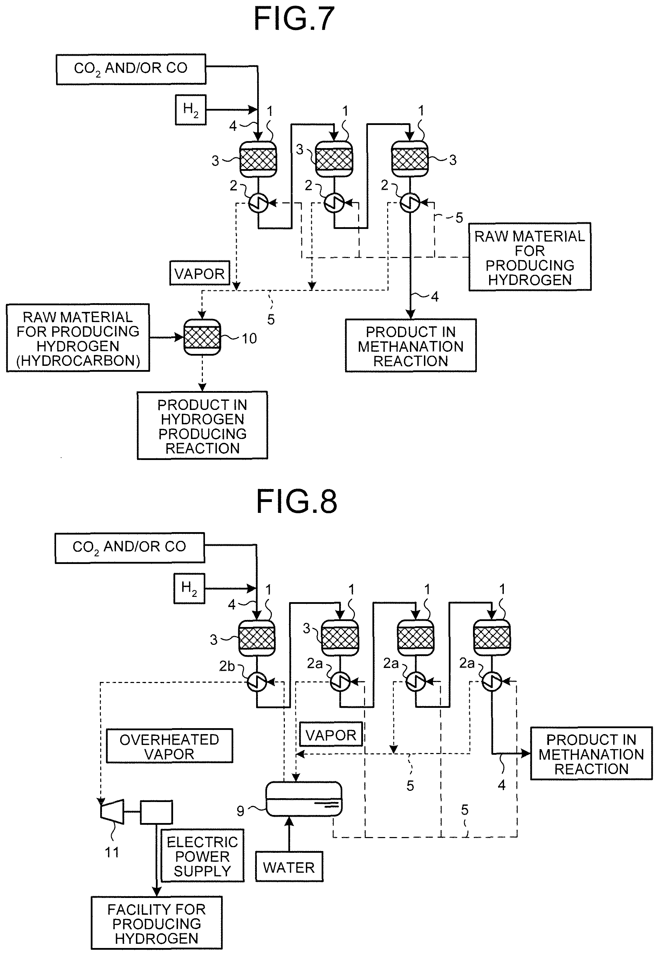

In the above method (4), a reactor for producing hydrogen, which performs water vapor reforming of hydrocarbon, is used, and the steam generated with the reaction heat generated in Step (A2) is introduced into the reactor for producing hydrogen. FIG. 7 shows an embodiment of a facility configuration preferable for performing the method (4). According to the embodiment in FIG. 7, a plurality of reactors 1 (methanation reactors) filled with the catalyst 3 (Ni-based catalyst) are arranged in series in a gas flow path 4, a heat exchanger 2 is arranged in a gas flow path 4 on the downstream side of each reactor 1, and the heat exchanger 2 (5 represents a heat carrier flow path) recovers reaction heat (gas sensible heat) of a methanation reaction in each reactor 1, in the same manner as in the embodiment in FIG. 1. According to this embodiment, water is used as a heat carrier, the heat exchanger 2 generates vapor for the heat recovery, and the vapor is introduced as water vapor for a reforming reaction into a reactor 10 for producing hydrogen to which hydrocarbon is supplied, and hydrogen is produced by water vapor reforming of hydrocarbon. Since a water vapor reforming reaction temperature is high, the method of utilizing the vapor generated by using the reaction heat of the methanation reaction as at least a part of the water vapor for the reforming reaction is particularly useful. Generating overheated vapor and supplying the overheated vapor as at least a part of water vapor for the reforming reaction with the facility configuration as shown in FIG. 6 is particularly effective in view of thermal efficiency.

FIG. 8 shows an embodiment of a facility configuration preferable for performing the above methods (5) and (6). According to this embodiment, a plurality of reactors 1 (methanation reactors) filled with the catalyst 3 (Ni-based catalyst) are arranged in series in a gas flow path 4, a heat exchanger 2 is arranged in a gas flow path 4 on the downstream side of each reactor 1, and the heat exchanger 2 (5 represents a heat carrier flow path) recovers reaction heat (gas sensible heat) of the methanation reaction in each reactor 1, in the same manner as in the embodiment in FIG. 1. Although water is used as a heat carrier and the heat exchanger 2 generates vapor for the heat recovery in this embodiment, water from the steam drum 9 is caused to flow through the heat carrier flow path 5 to the heat exchangers 2a (the heat exchangers 2a arranged on the downstream side of the reactors 1) provided for one reactor 1 or two or more reactors 1 on the downstream side among the plurality of reactors arranged in series in the gas flow path 4, and the heat exchanger 2a is caused to generate vapor for the heat recovery. The vapor is sent to the heat exchangers 2b (heat exchangers 2b arranged on the downstream side of the reactors 1) provided for one reactor 1 or two or more reactors 1 on the upstream side after liquid components thereof are removed after passing through the steam drum 9, and the heat exchangers 2b generate overheated vapor for heat recovery. In relation to the heat exchanger 2, three heat exchangers 2a and one heat exchanger 2b are arranged in this embodiment. The overheated vapor generated by the heat exchangers 2b is supplied to a steam turbine 11 to generate electric power. The electric power is supplied to a facility for producing hydrogen (not shown in the drawing), and hydrogen is produced by electrodepositing water in the above method (5), or hydrogen is produced by separating hydrogen from hydrogen-containing gas based on the PSA method in the above method (6), by using the electric power. In this method, the electric power generation may be increased in combination with, for example, waste heat power generation, such as thermoelectric conversion, using waste steam discharged from the steam turbine 11 or waste heat of pressurized heat exhausting water.

Among the aforementioned various embodiments, methods (FIGS. 3, and 5 to 8) of recovering reaction heat generated in Step (A2) with vapor are preferable methods because of excellent heat conductivity efficiencies and many actual accomplishments in power generation facilities. Particularly, an insulated fixed-bed reactor filled with the Ni-based catalyst which is excellent in heat resistance as described in FIG. 1 is particularly preferable since an outlet temperature of the methanation reactor can be set to 400 to 500°C, and therefore, the reaction heat can be recovered with overheated medium pressure (pressure of about 2 to 5 MPa) vapor, and hydrogen can be effectively produced, when the insulated fixed-bed reactor is employed as a methanation reactor.

One or more types of organic hydride selected from monoaromatic compound hydride and polyaromatic compound hydride are used as the raw material for producing hydrogen in the above method (1). Specifically, cyclohexane, methylcyclohexane, dimethylcyclohexane, decalin, methyldecalin, dimethyldecalin, tetralin, and perhydroanthracene can be exemplified, and one or more kinds from the above can be used. A dehydrogenation reaction temperature of organic hydride is about 300 to 400°C, which is lower than the outlet gas temperature of the insulated methanation reactor 1. Accordingly, it is possible to produce hydrogen by dehydrogenating organic hydride with any of the above facility configurations shown in FIGS. 2 to 6.

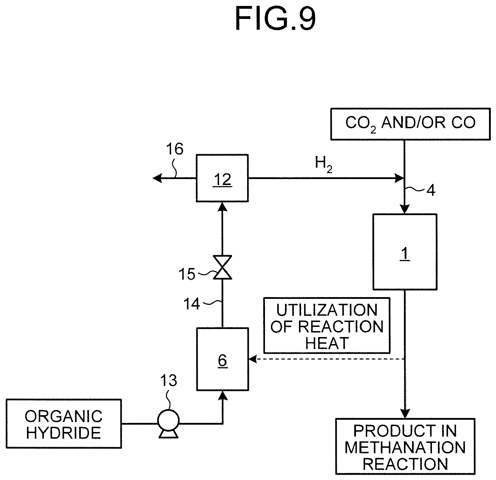

FIG. 9 schematically shows an embodiment of a case in which hydrogen is produced from organic hydride based on the above method (1) and the hydrogen is utilized in the methanation reaction in Step (A2), and any of the facility configurations shown in FIGS. 2 to 6 can be employed as a facility configuration. In the drawing, 1 represents a reactor (methanation reactor) in which a methanation reaction is performed, 4 represents a gas flow path, 6 represents a reactor for producing hydrogen (dehydrogenation reactor) in which dehydrogenation reaction of organic hydride is performed, 12 represents a hydrogen separator (distillation column) which separates hydrogen from a product material from the dehydrogenation reaction in the reactor 6 for producing hydrogen, 13 represents a pump which supplies organic hydride to the reactor 6 for producing hydrogen, 14 represents a flow path of a product material obtained by dehydrogenating organic hydride, 15 represents a back pressure valve, and 16 represents a flow path of a product obtained by dehydrogenating organic hydride after separating hydrogen.

It is preferable that reaction pressure of the dehydrogenation reaction in the reactor 6 for producing hydrogen be set to higher than reaction pressure of the methanation reaction in the reactor 1. This is because the need of compressor is eliminated, the compressor being for introducing hydrogen which has been produced in the reactor 6 into the reactor 1 by providing such a pressure difference and an energy efficiency in the system becomes significantly high. Specifically, inlet pressure of the reactor 6 for producing hydrogen in which the dehydrogenation reaction is caused is preferably set to be higher than the inlet pressure of the reactor 1 in which the methanation reaction is caused, by 0.1 to 0.5 MPa, and more preferably by 0.2 to 0.4 MPa depending on the pressure loss in the reactor 6 for producing hydrogen and a hydrogen separating device 12. When the difference between the inlet pressure of the dehydrogenation reactor (reactor 6) and the inlet pressure of the methanation reactor (reactor 1) is excessively small, hydrogen produced in the dehydrogenation reactor cannot be smoothly introduced to the methanation reactor in some cases, and on the other hand, when the difference between the inlet pressure of the dehydrogenation reactor and the inlet pressure of the methanation reactor is excessively large, hydrogen yield is lowered since the dehydrogenation reaction of organic hydride is more advantageous in view of equilibrium at lower pressure. By setting the reaction pressure for the dehydrogenation reaction in the dehydrogenation reactor (reactor 6) to be higher than the reaction pressure for the methanation reaction in the methanation reactor (reactor 1), or preferably by providing a pressure difference within the aforementioned range, the pressure for the dehydrogenation reaction is maintained with the pressure of which organic hydride is raised and organic hydride is then supplied to the dehydrogenation reactor (reactor 6), and also, it is possible to smoothly introduce separated hydrogen into the methanation reactor (reactor 1) without raising the pressure thereof and to achieve energy saving in the entire processes.

In relation to a decomposition reaction of ammonia as a hydrogen source in the above method (2), a reaction temperature at which equilibrium conversion under reaction pressure of 0.1 MPa is 95% is about 400°C. Accordingly, it is possible to produce hydrogen based on any of the methods shown in FIGS. 2 to 6 even in this case in the same manner as the dehydrogenation reaction of organic hydride. Since substances generated in decomposing ammonia are only N₂ and H₂, it is possible to achieve an inversion rate exceeding equilibrium by performing the decomposition reaction in a membrane reactor in combination between an existing hydrogen separating film such as Pd film and an ammonia decomposing catalyst, and therefore, it is preferable. As the ammonia decomposing catalyst, a transition metal-based catalyst such as iron, Ru, Ni, and Co can be used. The iron ore may be used as a catalyst, and particularly, high combined-water content ore can be preferably utilized as a catalyst since a specific surface area increases in dehydrating crystalline water.

After impurities are removed as necessary from hydrogen produced in Step (A5) as described above, hydrogen is converged into a hydrogen supply pipe on the upstream side of the methanation reactor in Step (A2) and used as a part of hydrogen necessary for the methanation reaction. The above expression "impurities are removed as necessary" means that impurities are removed to a level required for each of the methanation reaction in Step (A2), the blowing of the methanation gas into the blast furnace in Step (A4), and Step (A5) for producing hydrogen. Specifically, hydrogen purity of 90% or higher, or preferably of 95% or higher is applicable. The hydrogen purity of less than 90% often results in reduction in activity of the catalyst for producing methane due to impurities in hydrogen or results in lowered heat conductivity efficiency at, for example, the heat exchanger installed on the downstream side of the methanation reactor. This may also result in lowered reduction efficiency or lowered the thermal efficiency of iron ore in the blast furnace in blowing into the blast furnace in Step (A4). Although no technical problem occurs in Steps (A2), (A4), and (A5) even when the hydrogen purity exceeds 99.999%, excessive high purity brings about high costs, and therefore, the upper limit of the hydrogen purity is preferably set to 99.999%.

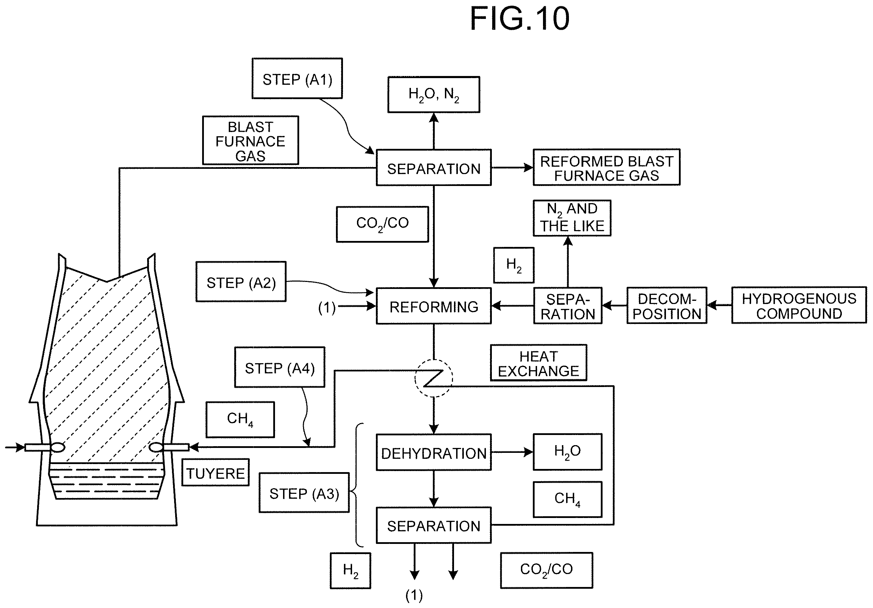

FIG. 10 shows an embodiment (gas processing flow) according to the present invention in the case where blast furnace gas is used as raw material gas (mixed gas). According to this embodiment, CO₂ and/or CO is firstly separated and collected from the blast furnace gas in Step (A1). Since the blast furnace gas contains H₂O and N₂, it is possible to enhance quality of the remaining gas (reformed blast furnace gas), and the remaining gas can be used as fuel or a hydrogen source, by separating and collecting them. Next, hydrogen is added to CO₂ and/or CO separated and collected from the blast furnace gas, and CO₂ and/or CO is converted (reformed) into CH₄, in Step (A2). Hydrogen is obtained by hydrogenous compound such as decomposing ammonia, and gas components (nitrogen in the case of ammonia) other than hydrogen after the decomposition are separated and removed, then hydrogen is supplied to Step (A2).

The reformed gas after the aforementioned Step (A2) is cooled by the heat exchange with the reformed gas immediately before being introduced into the blast furnace, and H₂O is then separated and removed in Step (A3). When CO₂ and/or CO which has not been reformed in Step (A2) and unreacted hydrogen remain in the reformed gas, CO₂ and/or CO and hydrogen may be separated, collected, and reused in Step (A2). Thus, the temperature of the reformed gas after subjecting to Step (A3) as described above is raised by heat exchanging with the reformed gas at a high temperature immediately after Step (A2), and the reformed gas is then blown with hot blast from the tuyere into the blast furnace (Step (A4)).

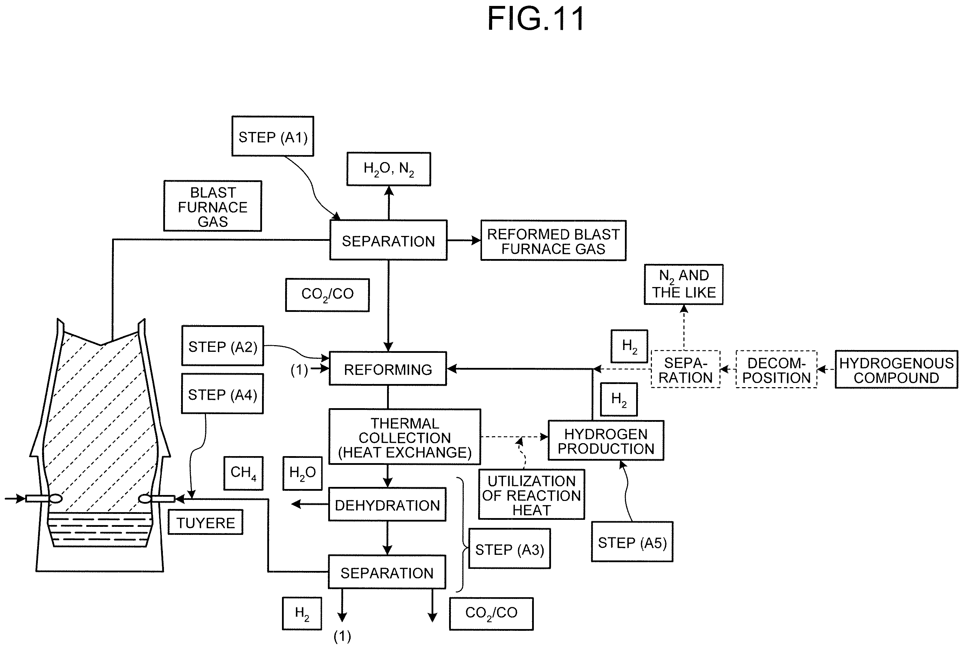

FIG. 11 shows an embodiment (gas processing flow) according to the present invention in the case where blast furnace gas is used as the raw material gas (mixed gas). According to this embodiment, Steps (A1) to (A4) are the same as those in FIG. 10, hydrogen is produced in Step (A5) by using reaction heat generated in Step (A2), and produced hydrogen is supplied to Step (A2) to be used for the methanation reaction. In Step (A5), hydrogen is produced based on any of the aforementioned methods (1) to (6) with any of the facilities in FIGS. 2 to 8.

Next, description will be given of a steelworks operating method according to the first embodiment of the present invention.

The steelworks operating method according to the first embodiment of the present invention includes Step (1) for separating and collecting CO₂ and/or CO from mixed gas containing CO₂ and/or CO, Step (A2) for adding hydrogen to CO₂ and/or CO separated and collected in the Step (A1) and converting CO₂ and/or CO into CH₄, and Step (A3) for separating and removing H₂O from the gas obtained after the Step (A2), and the gas obtained after the Step (A3) is utilized as fuel and/or a reducing agent in the steelworks. Preferably, the steelworks operating method further includes Step (A5) for producing hydrogen by using reaction heat generated in Step (A2) and at least part of hydrogen produced in the Step (A5) be used in Step (A2).

An air-heating furnace for producing hot blast to be supplied to the blast furnace, a heat storage burner which resembles a heating furnace that heats a steel piece such as heating slab, a cokes furnace, and a sintering machine as well as the aforementioned blast furnace can be exemplified as the facilities in the steelworks to which the gas obtained after Step (A3) is supplied. By supplying CH₄, which has been obtained according to the present invention, as fuel to facilities such as the heating furnace and the air-heating furnace, it is possible to save the amount of fuel gas used in such facilities.

The fuel gas used in the air-heating furnace is typically gas obtained by mixing the blast furnace gas and the cokes furnace gas and adjusting the amount of heat generation (about 1000 kcal/Nm³), and it is also possible to use CH₄, which has been obtained in the present invention, instead of the blast furnace gas and the cokes furnace gas. According to the present invention, CH₄ obtained by reforming CO₂ and/or CO (about 8000 to 8500 kcal/Nm³ with lower combustion heat) has a larger amount of heat generation as compared with the ordinary blast furnace gas (about 800 kcal/Nm³ with lower combustion heat), and a smaller amount of CH₄ is required as compared with the blast furnace gas, which results in reduction of pipe fitting costs. Although blast furnace gas, cokes furnace gas, and converter furnace gas are generated as byproducts from the blast furnace, the cokes furnace, and the converter furnace in the steelworks as described above, respectively, and although the byproduct gas is utilized as heat sources (fuel) for the heating furnace and the air-heating furnace in the steelworks, the byproduct gas as the heat sources may be insufficient in some cases due to various reasons, and external fuel such as natural gas may be used in some cases, and it is possible to reduce the use amount of external fuel for compensation of the shortage if CH₄ obtained by reforming CO₂ and/or CO as the heat source is used.

The raw material gas (mixed gas) included as a component or a target of Steps (A1) to (A3) and Step (A5) in the steelworks operating method is the same as that in the aforementioned blast furnace operating method. When it is necessary to raise the gas temperature of the reformed gas and to utilize the gas, the reformed gas may be used after the heat exchange with the reformed gas at high temperature immediately after Step (A2) to raise the temperature. The temperature of the reformed gas may be raised by indirect heating using another heat source. When the reformed gas (CH₄) is utilized at the air-heating furnace, which is an example of facilities, the use amount of the reformed gas is determined in consideration of the use amount of fuel (the mixed gas of the blast furnace gas and the cokes furnace gas in the case of the air-heating furnace) typically used in the facility. The fuel typically used is reduced in accordance with the use amount of the reformed gas.

### [Example]

Blast furnace operating conditions before implementing the present invention are as follows.
blast volume: 1112 Nm³/t-p
oxygen enrichment volume: 7.6 Nm³/t-p
blast moisture: 25 g/Nm³
blast temperature: 1150°C
reducing material ratio: 497 kg/t-p (cokes ratio: 387 kg/t-p, pulverizing coal ratio: 110 kg/t-p)
generation amount of blast furnace gas (dry): 1636 Nm³/t-p (nitrogen: 54.0 vol%, CO₂: 21.4 vol%, CO: 21.0 vol%, hydrogen: 3.6 vol%)
CO₂ discharge amount (CO₂ conversion of C supplied to blast furnace): 1539 kg/t-p

### [Example 1]

Based on processing flow as shown in FIG. 10, part of blast furnace gas was reformed and cycled.

### Step (A1)

After about 10 vol% of the blast furnace gas generated from the blast furnace was introduced into an adsorption column filled with CO₂ adsorbent, the adsorption column was caused to adsorb CO₂ at an absolute pressure of 200 kPa and then to desorb CO₂ at an absolute pressure of 7 kPa to obtain CO₂ (CO₂ concentration of 99 vol%). After the blast furnace gas from which CO₂ has been separated and collected was introduced into the adsorption column filled with CO adsorbent, the adsorption column was caused to adsorb CO at an absolute pressure of 200 kPa and then to desorb CO at an absolute pressure of 7 kPa to obtain CO (CO concentration of 99 vol%).

### Steps (A2) to (A4)

CO₂ and CO (mixed gas of CO₂ and CO) separated and collected as described above was introduced into a reforming apparatus (reactor), H₂ obtained by decomposing ammonia was added thereto (H_{2/}(CO₂ + CO) : 5 molar ratio), and CO₂ and CO were reformed (converted) into CH₄ under conditions of reaction temperature: 500°C and SV (Space Velocity): 100h⁻¹ using Ni based catalyst. The (CO₂ + CO) inversion rate was about 100%. The reformed gas was subjected to heat exchange and cooled, H₂O was removed therefrom by a water remover, unreacted H₂ was adsorbed and separated (removed), and the reformed gas was then blown from the blast furnace tuyere. The adsorbed and separated H₂ was utilized again as hydrogen for reforming (CO₂ + CO) . In this example, reducing material ratio: 439 kg/t-p (cokes ratio: 329 kg/t-p, pulverizing coal ratio: 110 kg/t-p) and CO₂ discharge amount: 1358 kg/t-p were obtained, and it was possible to reduce the CO₂ discharge amount by about 11.7% as compared with the blast furnace operating conditions before implementing the present invention.

### [Example 2]

Based on processing flow as shown in FIG. 11, part of blast furnace gas was reformed and cycled. In Step (A2) and Step (A5), a facility including a mechanism for obtaining overheated vapor shown in FIG. 6 embedded in a facility (namely, a facility in which five sets of the reactor 1 and the heat exchanger 2 were arranged in series) shown in FIG. 5 was used.

### Step (A1)

After about 10 vol% of the blast furnace gas generated from the blast furnace was introduced into an adsorption column filled with CO₂ adsorbent, the adsorption column was caused to adsorb CO₂ at an absolute pressure of 200 kPa and then to desorb CO₂ at an absolute pressure of 7 kPa to obtain CO₂ (CO₂ concentration of 99 vol%). After the blast furnace gas from which CO₂ has been separated and collected was introduced into the adsorption column filled with CO adsorbent, the adsorption column was caused to adsorb CO at an absolute pressure of 200 kPa and then to desorb CO at an absolute pressure of 7 kPa to obtain CO (CO concentration of 99 vol%).

### Steps (A2) to (A4)

A flow rate of each gas was controlled such that a molar ratio H₂/(CO₂ + CO) between CO₂ and CO (mixed gas of CO₂ and CO) separated and collected as described above and H₂ with the purity of 99% was 5, and the gas was used as a raw material gas. The raw material gas was introduced into a facility, in which five sets of an insulated methanation reactor and a heat exchanger filled with the Ni-based catalyst were arranged in series, and CO₂ and CO were reformed (converted) into CH₄ under conditions of reactor inlet temperature: 265°C, reaction temperature: 470°C and SV (Space Velocity): 2000h⁻¹. However, conditions of reactor inlet temperature: 220°C and rector outlet temperature: 250°C were set only for the reactor on the final stage (fifth set). The [CO₂ + CO] inversion rate was about 100%. The reformed gas was cooled with a heat exchanger, H₂O was removed therefrom by a water remover, unreacted H₂ was adsorbed and separated (removed), and the reformed gas was blown from the blast furnace tuyere. The adsorbed and separated H₂ was utilized again as hydrogen for reforming (CO₂ + CO). In this example, reducing material ratio: 439 kg/t-p (cokes ratio: 329 kg/t-p, pulverizing coal ratio: 110 kg/t-p) and CO₂ discharge amount: 1358 kg/t-p were obtained, and it was possible to reduce the CO₂ discharge amount by about 11.7% as compared with the blast furnace operating conditions before implementing the present invention.

### Step (A5)

As the reactor for producing hydrogen, a dehydrogenation reactor which produced hydrogen by a dehydrogenation reaction of organic hydride was used. Vapor was generated with a heat exchanger on the downstream side of the methanation reactor, supplied to the shell side of a methylcyclohexane (MCH) dehydrogenation reactor (shell-and-tube reactor), and used as the heat source for the dehydrogenation reaction. The vapor was overheated vapor under a pressure of 4 MPa and at a temperature of 400°C, and the flow rate thereof was 38 t/h. However, since the power for a compressor for introducing the raw material gas into the methanation reactor (Step A2), a compressor for blowing methanation gas into the blast furnace (Step A4), and a boost pump for water to be supplied to the heat exchanger (Step A5) was based on vapor drive, the amount of vapor available as the heat source for MCH dehydrogenation reaction was 26 t/h.

The tube side of the dehydrogenation reactor was filled with a Pt-based dehydrogenation catalyst (SV: 100h⁻¹), 21 t/h of MCH was supplied thereto, and the dehydrogenation reaction was performed under a pressure of 0.2 MPa at a temperature at that time. Since the gas at the outlet of the dehydrogenation reactor contains toluene and a small amount of unreacted MCH as well as H₂, a distillation column was installed on the downstream side of the dehydrogenation reactor to separate H₂. Since the target purity of H₂ was set to 95%, a column top temperature of the distillation column was 42°C, and a capacitor was sufficiently cooled with water. A production amount of hydrogen was 12700 Nm³/h, and it was possible to produce as byproduct about 20% of H₂ to be supplied to Step (A2). The total amount of H₂ separated at the distillation column was introduced into a raw material gas supply system in Step (A2) to be used in the methanation reaction in the methanation reactor.

### [Example 3]

Based on processing flow as shown in FIG. 11, part of blast furnace gas was reformed and cycled. In Step (A2) and Step (A5), a facility including a mechanism for obtaining overheated vapor shown in FIG. 6 embedded in a facility (namely, a facility in which five sets of the reactor 1 and the heat exchanger 2 were arranged in series) shown in FIG. 5 was used.

### Step (A1)

Same step was performed as Example 2.

### Steps (A2) to (A4)

Same step was performed as Example 2.

### Step (A5)

As a reactor for producing hydrogen, a membrane reactor for producing hydrogen by decomposing NH₃ was used. Other than that, H₂ was produced using 26 t/h of overheated vapor under a pressure of 4 MPa and at a temperature of 400°C in the same manner as in Step (A5) in Example 2. A supply amount of NH₃ was 14 t/h. Since N₂ corresponding to 1/3 mols of H₂ was generated in decomposing NH₃, H₂ was separated from the decomposition gas based on the PSA method. As a result, the production amount of H₂ with the purity of 99% was 21900 Nm³/h, and it was possible to produce about 30% of H₂ to be supplied to Step (A2). Ru-based was used as an NH₃ decomposition catalyst. The total amount of produced H₂ was introduced into the raw material gas supply system in Step (A2) and used for the methanation reaction in the mathanation reactor.

### [Example 4]

Based on processing flow as shown in FIG. 11, part of blast furnace gas was reformed and cycled. In Step (A2) and Step (A5), a facility including a mechanism for obtaining overheated vapor shown in FIG. 6 embedded in a facility (namely, a facility in which five sets of the reactor 1 and the heat exchanger 2 were arranged in series) shown in FIG. 5 was used.

### Step (A1)

Same step was performed as Example 2.

### Steps (A2) to (A4)

A flow rate of each gas was controlled such that a molar ratio H₂/(CO₂ + CO) between CO₂ and CO (mixed gas of CO₂ and CO) separated and collected as described above from the blast furnace gas and H₂ with the purity of 99% was 5, and the gas was used as a raw material gas. The raw material gas was introduced into a facility, in which five sets of an insulated methanation reactor and a heat exchanger filled with the Ni-based catalyst were arranged in series, and CO₂ and CO were reformed (converted) into CH₄ under conditions of reactor inlet temperature: 265°C, reactor outlet temperature: 470°C, SV (Space Velocity): 2000h⁻¹, and reactor inlet pressure: 0.3 MPa. However, conditions of reactor inlet temperature: 220°C and rector outlet temperature: 250°C were set only for the reactor on the final stage (fifth set). The [CO₂ + CO] inversion rate was about 100%. The pressure of the methanation gas on the outlet side of the heat exchanger on the downstream side of the reactor on the final stage was 0.2 MPa.

The reformed gas was cooled with a heat exchanger, H₂O was removed therefrom by a water remover, unreacted H₂ was adsorbed and separated (removed), and the reformed gas was blown from the blast furnace tuyere. The adsorbed and separated H₂ was utilized again as hydrogen for reforming (CO₂ + CO). In this example, reducing material ratio: 439 kg/t-p (cokes ratio: 329 kg/t-p, pulverizing coal ratio: 110 kg/t-p) and CO₂ discharge amount: 1358 kg/t-p were obtained, and it was possible to reduce the CO₂ discharge amount by about 11.7% as compared with the blast furnace operating conditions before implementing the present invention.

### Step (A5)

As the reactor for producing hydrogen, a dehydrogenation reactor which produced hydrogen by a dehydrogenation reaction of organic hydride was used. Vapor was generated with a heat exchanger on the downstream side of the methanation reactor, supplied to the shell side of a methylcyclohexane (MCH) dehydrogenation reactor (shell-and-tube reactor), and used as the heat source for the dehydrogenation reaction. The vapor was overheated vapor under a pressure of 4 MPa and at a temperature of 400°C, and the flow rate thereof was 38 t/h. However, since the power for a compressor for introducing the raw material gas into the methanation reactor (Step A2), a compressor for blowing methanation gas into the blast furnace (Step A4), and a boost pump for water to be supplied to the heat exchanger (Step A5) was based on vapor drive, the amount of vapor available as the heat source for MCH dehydrogenation reaction was 26 t/h.

The tube side of the dehydrogenation reactor was filled with a Pt-based dehydrogenation catalyst (SV: 100h⁻¹), 20 t/h of MCH was supplied thereto while the pressure thereof is raised to 0.6 MPa. The dehydrogenation reaction was performed at the temperature at that time. The outlet pressure of the dehydrogenation reactor was 0.5 MPa. Since the gas at the outlet of the dehydrogenation reactor contains toluene and a small amount of unreacted MCH as well as H₂, a distillation column was installed on the downstream side of the dehydrogenation reactor to separate H₂. Since a column top pressure of the distillation column was set to 0.4 MPa, and the target purity of H₂ was set to 95%, the column top temperature of the distillation column was 57°C, and a capacitor was sufficiently cooled with water.

A production amount of hydrogen was 10600 Nm³/h, and it was possible to produce as byproduct 16% of H₂ to be supplied to Step (A2). The total amount of H₂ separated at the distillation column was introduced into a raw material gas supply system in Step (A2) to be used in the methanation reaction in the methanation reactor. Since the column top pressure of the distillation column, namely the pressure of separated hydrogen, was 0.4 MPa, the pressure was sufficiently higher than the inlet pressure (0.3 MPa) of the methanation reactor and it was possible to introduce the produced hydrogen into the methanation reactor without need to raise the pressure thereof. It was possible to maintain the pressure of the dehydrogenation reaction only with the pressure (0.6 MPa) of MCH as a raw material, the pressure-raising shaft power was as small as 8 kW, and it was possible to save energy to a great extent in the entire processes.

### [Example 5]

Based on processing flow as shown in FIG. 11, part of blast furnace gas was reformed and cycled. In Step (A2) and Step (A5), a facility including a mechanism for obtaining overheated vapor shown in FIG. 6 embedded in a facility (namely, a facility in which five sets of the reactor 1 and the heat exchanger 2 were arranged in series) shown in FIG. 5 was used.

### Step (A1)

Same step was performed as Example 2.

### Steps (A2) to (A4)

Same step was performed as Example 4.

### Step (A5)

The MCH dehydrogenation reaction was performed in the same manner as in Example 4 except that MCH was supplied to the dehydrogenation reactor while the pressure thereof is raised to 1.1 MPa. The outlet pressure of the dehydrogenation reactor was 1 MPa. Although the production amount of hydrogen decreased to 9200 Nm³/h as compared with Example 4 by 10% or more, the pressure-raising shaft power was 19 kW, which was only 2.5 times as large as that in Example 4 (8 kW).

### [Example 6]

Based on processing flow as shown in FIG. 11, part of blast furnace gas was reformed and cycled. In Step (A2) and Step (A5), a facility including a mechanism for obtaining overheated vapor shown in FIG. 6 embedded in a facility (namely, a facility in which five sets of the reactor 1 and the heat exchanger 2 were arranged in series) shown in FIG. 5 was used.

### Step (A1)

Same step was performed as Example 2.

### Steps (A2) to (A4)

Same step was performed as Example 4.

### Step (A5)

The MCH dehydrogenation reaction was performed in the same manner as in Example 4 except that MCH was supplied to the dehydrogenation reactor while the pressure thereof is raised to 0.3 MPa. The outlet pressure of the dehydrogenation reactor was 0.2 MPa. Since the column top pressure of the distillation column was set to 0.1 MPa, the column top temperature of the distillation column was 28°C, cooling of the capacitor was not sufficiently performed with water, and it was necessary to install a chiller. Although the production amount of hydrogen increased to 12700 Nm³/h as compared with Example 4, it was necessary to prepare a compressor for introducing the produced hydrogen into the methanation reactor since the pressure thereof was 0.1 MPa, and a pressure-raising shaft power as large as 830 kW was required. While the pressure-raising shaft power of MCH was 3 kW, the total pressure-raising power was 833 kW, and the energy balance as the entire processes was degraded as compared with Example 4.

### Second Embodiment

The blast furnace operating method according to the second embodiment of the present invention includes Step (B1) for separating and collecting CO₂ from mixed gas containing CO₂, Step (B2) for adding hydrogen-based reducing agent to CO₂ separated and collected in Step (B1) and converting (reforming) CO₂ into CO, Step (B3) for separating and removing H₂O or H₂O and N₂ from the gas obtained after Step (B2), and Step (B4) for blowing the gas (typically, CO gas or gas containing CO as a main component) obtained after Step (B3) into a blast furnace. According to a preferable embodiment in the case where the mixed gas contains both CO₂ and CO, CO₂ and CO are respectively separated and collected from the mixed gas in Step (B1), and the gas obtained after Step (B3) is blown with CO separated and collected in Step (B1) into the blast furnace in Step (B4). CO blown into the blast furnace in Step (B4) functions as a supplemental reducing agent for iron ore. The reduction of iron ore with CO is an exothermal reaction, and thermal compensation to the lower part of the blast furnace is not required as compared with that required for reducing the iron ore by hydrogen.

Any kind of mixed gas can be used as long as the mixed gas contains CO₂ or CO₂ and CO. Although representative examples of the mixed gas generated in a process for manufacturing iron include a blast furnace gas and a converter furnace gas, the present invention is not limited thereto, and mixed gas generated in another industrial field may be used. Although it is desired that a CO₂ concentration of the mixed gas be high in order to effectively separate CO₂, the mixed gas containing 15 vol% or more of CO₂ is preferably used on the assumption of blast furnace gas, converter furnace gas, and discharged gas in heating furnace combustion. The present invention is most useful when blast furnace gas is used as the mixed gas of a raw material, and it is possible to reduce the CO₂ discharge amount from the blast furnace by reforming CO₂ contained in the blast furnace gas into CO and cycling the CO as a reducing agent in the blast furnace. As general compositions of the blast furnace gas, about 15 to 25 vol% of CO₂, about 15 to 25 vol% of CO, about 45 to 55 vol% of N₂, and about 0 to 5 vol% of hydrogen are contained. When the blast furnace gas is used as the mixed gas of the raw material, part of or entire blast furnace gas generated from the blast furnace is a target, and when 20 vol% of the blast furnace gas is used, the CO₂ discharge amount can be reduced by about 5 to 6%.

Hereinafter, description will be given of Steps (B1) to (B4) constituting the blast furnace operating method according to the second embodiment of the present invention.

### Step (B1)

The mixed gas as raw material gas is mixed gas containing CO₂ (or mixed gas containing CO₂ and CO), and CO₂ is separated and collected from the mixed gas in Step (B1). In the case of the gas which is a mixed gas including CO₂ and CO, although it is preferable that CO₂ and CO be respectively separated and collected from the mixed gas and the separated and collected CO is finally blown into the blast furnace with CO obtained by converting (reforming) CO₂ in Step (B2), the present invention is not limited thereto, and only CO₂ may be separated and collected from the mixed gas containing CO₂ and CO.

As methods of separating and collecting CO₂ and CO from the mixed gas, arbitrary methods may be respectively used. When CO₂ and CO are respectively separated and collected from the mixed gas, CO may be separated and collected after CO₂ is separated and collected, and vice versa. CO₂ and CO may be separated and collected at the same time. As methods of separating and collecting CO₂ from the mixed gas, a method of liquefying or solidifying CO₂ by pressurizing or cooling, a method of separating and collecting CO₂ by heating or depressurizing after causing caustic soda or amine, which is an example of basic aqueous solution, to absorb CO₂, a method of separating and collecting CO₂ by heating or depressurizing after causing activated carbon or zeolite to absorb CO₂, and a method of separating and collecting CO₂ by a CO₂ separating film have been known, and an arbitrary method including one of the above methods can be employed.

As methods of separating and collecting CO from the mixed gas, a method of separating and collecting CO by heating or depressurizing after causing copper/activated carbon, copper/alumina, or copper/zeolite, which is an example of adsorbent, to adsorb CO and a method of separating and collecting CO by heating or depressurizing after causing absorbing solution containing copper as a main component to absorb CO have been known, and an arbitrary method including one of the above methods can be employed. Although gas purity of CO₂ and CO separated and collected from the mixed gas is not particularly limited, purity of 80 vol% or higher is preferable from the standpoint of downsizing a reactor used in the reforming step.

### Step (B2)

Although in Step (B2), hydrogen-based reducing agent is added to CO₂ separated and collected in Step (B1), and CO₂ is converted (reformed) into CO, one or more kinds selected from hydrogen, hydrocarbon, and ammonia are used as the hydrogen-based reducing agent (gas). Specifically, (i) LNG or LPG containing CH₄, (ii) steelworks byproduct gas containing CH₄ and hydrogen (for example, cokes furnace gas), (iii) hydrogen, (iv) ammonia and the like can be exemplified, and one or more kinds from the above can be used. Since the hydrogen-based reducing agent which does not newly generate CO₂ in the performed step is preferable from the standpoint of reducing the CO₂ discharge amount, the hydrogen-based reducing agents which do not contain carbon, namely hydrogen and ammonia are particularly preferable among the above. Ammonia is generated in manufacturing cokes by subjecting coal to destructive distillation (an ammonia generation amount is about 3.3 Nm³/t-coal) and is collected as liquid ammonia or ammonium sulfate in a current situation. When ammonia can be used as a hydrogen-based reducing agent in the present invention, it is not necessary to obtain a hydrogen-based reducing agent outside the steelworks, or it is possible to reduce the amount of a hydrogen-based reducing agent to be obtained outside the steelworks.

As a method of reducing CO₂ with the hydrogen-based reducing agent (preferably hydrogen or/and ammonia), a known method of reducing with a specific catalyst or the like can be employed. The CO₂ reduction reaction by hydrogen and the CO₂ reduction reaction by ammonia are represented as the following Formulae (8) and (9), respectively.

CO₂ + H₂ = CO + H₂O ΔH = 9.9 kJ/mol (endothermic) (8)

CO₂ + NH₃ = CO + 1/2H₂ + H₂O + 1/2N₂ ΔH = 20.9 kJ/mol (endothermic) (9)

The reaction of Formula (8) represents CO₂ equilibrium conversion of about 45% at 500°C, and the reaction of Formula (9) represents CO₂ equilibrium conversion of about 95%. Typically, Fe, Ni, or Co, which is an example of a transition metal-based catalyst, is used in both reactions (same is true when CH₄, which is an example of hydrocarbon, is used as the hydrogen-based reducing agent), CO₂ is reformed into CO. The iron ore may be used as a catalyst. Particularly, high combined-water content ore can be preferably used as a catalyst since the specific surface area thereof increases when the combined-water is dehydrated. A catalyst of Al₂O₃, which is an example of an oxide carrier, carrying Pd or Ru, which is an example of a precious metallic element, may be used.

In order to add the hydrogen-based reducing agent to CO₂ and reform CO₂ into CO by using a catalyst, CO₂ with which the hydrogen-based reducing agent has been mixed is typically introduced into a reactor which is filled with the catalyst, and a reaction of converting (reforming) CO₂ into CO is caused. Although a fixed-bed reactor, a fluidized-bed reactor, or an entrained-bed reactor can be used as a reactor, the fluidized-bed reactor or the entrained-bed reactor are particularly preferable in consideration of that the reaction is an endothermic reaction. In accordance with a type of such a reactor, physical nature of the catalyst is appropriately selected. An amount of the hydrogen-based reducing agent to be mixed with CO₂ is preferably equal to or larger than a stoichiometric proportion. The reaction for reforming CO₂ into CO is an endothermic reaction as represented by the above reaction formulae, and as a heat source therefor, COG sensible heat, slag sensible heat, or sinter sensible heat, which is uncollected waste heat in the steelworks, may be utilized, or heat obtained by combusting CO obtained in the present invention may be utilized. The heat source may be obtained by separately combusting fuel.

### Step (B3)

In Step (B3), H₂O or H₂O and N₂ are separated and removed from the gas obtained after the above Step (B2) (hereinafter, referred to as "reformed gas"). When CO₂ is reformed into CO by the hydrogen-based reducing agent, component consuming reducing materials (cokes) in the blast furnace are generated at the same time, and the components are contained in the reformed gas. Specifically, H₂O is generated when hydrogen or CH₄, which is an example of hydrocarbon, is used as the hydrogen-based reducing agent, and H₂O and N₂ are generated when ammonia is used as the hydrogen-based reducing agent. When H₂O is introduced into the blast furnace, cokes in the blast furnace are consumed, and on the contrary, a CO₂ discharge amount increases. On the other hand, even when N₂ is introduced into the blast furnace, sensible heat for heating N₂ to hot gas is required while cokes in the blast furnace are not consumed, which results in increase in the use amount of cokes as a result. Accordingly, it is necessary to separate and remove H₂O (when hydrogen or CH₄, which is an example of hydrocarbon, is used as the hydrogen-based reducing agent) or H₂O and N₂ (when ammonia is used as the hydrogen-based reducing agent) from the reformed gas.

As a method of separating and removing H₂O from the reformed gas, a cooling method or an adsorption method can be applied. According to the cooling method, the reformed gas is cooled down to a temperature which is equal to or lower than a dew-point temperature, and H₂O is condensed and removed. The dew-point temperature depends on H₂O concentration of the reformed gas, and it is typically preferable that the reformed gas be cooled down to a temperature which is equal to or lower than 30°C for the blast furnace operation since H₂O can be appropriately condensed and removed and concentration becomes the same level as that of moisture concentration of blast air blown into the blast furnace typically. According to the adsorption method, silica gel which is an example of adsorbent for dehumidification is used, and a method of repeating adsorption and reproduction in an adsorption column or a honeycomb rotor method of sequentially repeating reproduction and adsorption while rotating adsorbent cast in a honeycomb shape can be appropriately employed. As a method of cooling the reformed gas, heat exchange may be performed with the reformed gas (typically, ambient temperature) in the course of being supplied to the blast furnace after Step (B3). In order to separate and remove N₂ from the reformed gas, it is possible to substantially employ a method of separating and removing N₂ by applying a method of separating and collecting CO from the mixed gas as performed in Step (B1) and separating CO from the reformed gas. The specific method is as described above in Step (B1).

When part of the hydrogen-based reducing agent (hydrogen or/and ammonia) added to reform CO₂ in the above Step (B2) remains in an unreacted state in the reformed gas, the part of the hydrogen-based reducing agent may be separated, collected, and reused as the hydrogen-based reducing agent in Step (B2). In order to separate and collect hydrogen or ammonia, which is an example of the hydrogen-based reducing agent, from the reformed gas, for example, a method of adsorbing the gas components using adsorbent can be employed. When CO₂ which has not been reformed in the above Step (B2) remains in the reformed gas, CO₂ may be separated and removed by the aforementioned method. As described above, the reformed gas typically becomes gas mainly containing CO or gas substantially containing only CO.

### Step (B4)

In Step (B4), the reformed gas obtained after Step (B3) is blown as a supplemental reducing agent into the blast furnace, and the reformed gas may be mixed with CO and blown into the blast furnace when CO is also separated and collected in the above Step (B1). The reformed gas (or reformed gas with which CO separated and collected in Step (B1) has been mixed) is preferably blown into the blast furnace while a gas temperature is raised in consideration of the blast furnace operation, and therefore, heat exchange may be performed with the reformed gas at a high temperature immediately after Step (B2) to raise the temperature, and the reformed gas may then be blown into the blast furnace. Another heat source may be used to raise the temperature of the reformed gas by indirect heating. Although the reformed gas is typically blown into the blast furnace through a tuyere, the present invention is not limited thereto. When the reformed gas is blown from the tuyere, typically, an injection lance is installed at the tuyere such that the reformed gas is blown from the injection lance.

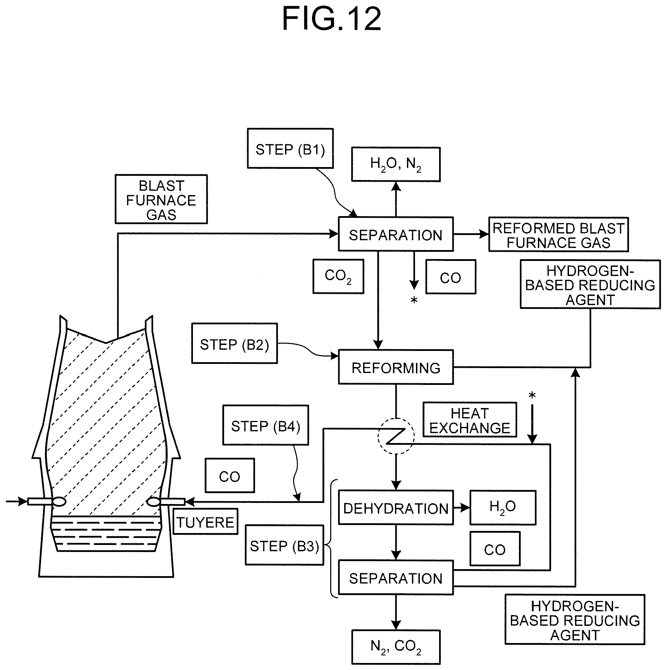

FIG. 12 shows an embodiment (gas processing flow) in the case where blast furnace gas is used as the raw material gas (mixed gas) in the blast furnace operating method according to the second embodiment of the present invention. According to this embodiment, CO₂ and CO are firstly respectively separated from the blast furnace gas in Step (B1). Since the blast furnace gas contains H₂O and N₂, it is possible to enhance quality of the remaining gas (reformed blast furnace gas) by separating and removing H₂O and N₂, and the remaining gas can be utilized as fuel or a hydrogen source. Next, a hydrogen-based reducing agent is added to CO₂ separated and collected from the blast furnace gas, and CO₂ is converted (reformed) into CO, in Step (B2).

The reformed gas is cooled by the heat exchange with the reformed gas (the reformed gas with which CO separated and collected in Step (B1) has been mixed) immediately before being introduced into the blast furnace, and H₂O or H₂O and N₂ are then separated and removed in Step (B3). First, when H₂O is separated and removed by dehydration, and the reformed gas contains N₂ (when ammonia is used as the hydrogen-based reducing agent), N₂ is separated and removed. When CO₂ which has not been reformed in Step (B2) and the unreacted hydrogen-based reducing agent remain in the reformed gas, CO₂ is separated and removed, and the hydrogen-based reducing agent is separated, collected, and sent to Step (B2) to be reused. After CO separated and collected from the mixed gas in the above Step (B1) is mixed with the reformed gas obtained as described above after Step (B3), heat exchange is performed with the reformed gas at a high temperature immediately after the above Step (B2), and the reformed gas is then blown with hot blast from the tuyere into the blast furnace.

Next, description will be given of a steelworks operating method according to the second embodiment of the present invention.

The steelworks operating method includes Step (B1) for separating and collecting CO₂ from the mixed gas containing CO₂, Step (B2) for adding a hydrogen-based reducing agent to CO₂ separated and collected in Step (B1) and converting (reforming) CO₂ into CO, and Step (B3) for separating and removing H₂O or H₂O and N₂ from the gas obtained after Step (B2), and the gas obtained after Step (B3) (typically, CO gas or gas mainly containing CO) is used as fuel and/or a reducing agent in the steelworks. According to a preferable embodiment in the case where the mixed gas contains CO₂ and CO, CO₂ and CO are respectively separated and collected from the mixed gas in Step (B1), and the gas obtained after Step (B3) is supplied with CO separated and collected in Step (B1) to facilities in the steelworks where the gas and CO are used. Although an air-heating furnace for producing hot blast to be supplied to the blast furnace, a heating furnace which resembles a heat storage burner that heats a steel piece such as heating slab, a cokes furnace, and a sintering machine as well as the aforementioned blast furnace can be exemplified as the facilities in the steelworks to which the gas obtained after Step (B3) is supplied, the present invention is not limited thereto. By supplying CO, which has been obtained according to the present invention, as fuel to the heating furnace and the air-heating furnace which are examples of facilities, it is possible to save the amount of fuel gas used in such facilities.

The fuel gas used in the air-heating furnace is typically gas obtained by mixing blast furnace gas and cokes furnace gas and adjusting the amount of heat generation (about 1000 kcal/Nm³), and it is possible to utilize CO, which has been obtained according to the present invention, instead of the blast furnace gas and the cokes furnace gas. The amount of heat generation of CO (about 3000 kcal/Nm³) obtained by reforming CO₂ in the present invention is larger than that of ordinary blast furnace gas (about 800 kcal/Nm³), and smaller amount of CO is required as compared with the blast furnace gas, which results in reduction of pipe fitting costs. Although blast furnace gas, cokes furnace gas, and converter furnace gas are generated as byproducts from the blast furnace, the cokes furnace, and the converter furnace in the steelworks as described above, and these byproduct gases are utilized as heat sources (fuel) for the heating furnace and the air-heating furnace in the steelworks, the byproduct gas as the heat sources are insufficient in some cases due to various reasons, and CO obtained by reforming CO₂ is useful as a heat source compensating for the shortage.

The raw material gas (mixed gas) included as a component or a target of Steps (B1) to (B3) in the steelworks operating method is the same as that in the aforementioned blast furnace operating method. Although the reformed gas obtained after Step (B3) is utilized as fuel and/or a reducing agent for the air-heating furnace and the heating furnace, the reformed gas may be mixed with CO and utilized when CO is separated and collected from the mixed gas in the above Step (B1). The reformed gas (or the reformed gas with which CO separated and collected in Step (B1) is mixed) is preferably utilized after the gas temperature thereof is raised, and for this reason, the reformed gas may be utilized after the heat exchange with the reformed gas at a high temperature immediately after Step (B2) to raise the temperature. The temperature of the reformed gas may be raised by indirect heating using another heat source. When the reformed gas is utilized at the air-heating furnace, which is an example of facilities, the use amount of the reformed gas is determined in consideration of the use amount of fuel (the mixed gas of the blast furnace gas and the cokes furnace gas in the case of the air-heating furnace) typically used in the facility. The fuel typically used is reduced in accordance with the use amount of the reformed gas.

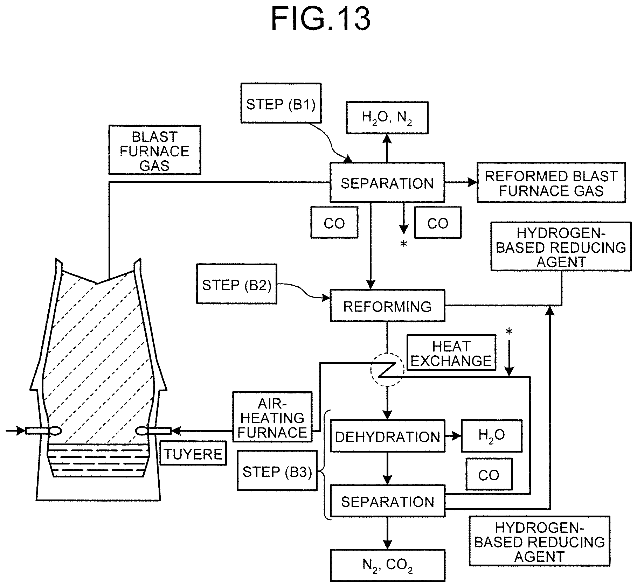

FIG. 13 shows an embodiment (gas processing flow) in the case where the blast furnace gas is used as the raw material gas (mixed gas) and the reformed gas is used in the air-heating furnace in the steelworks operating method according to the second embodiment of the present invention. According to this embodiment, CO₂ and CO are firstly respectively separated and collected from the blast furnace gas in Step (B1). Since the blast furnace gas contains H₂O and N₂, it is possible to enhance quality of the remaining gas (reformed blast furnace gas) by separating and removing these H₂O and N₂, and the remaining gas can be utilized as fuel and a hydrogen source. Next, the hydrogen-based reducing agent is added to CO₂ separated and collected from the blast furnace gas, and CO₂ is converted (reformed) into CO, in Step (B2).

After the reformed gas is cooled down by the heat exchange with the reformed gas (the reformed gas with which CO separated and collected in Step (B1) is mixed) before being supplied into the air-heating furnace, and H₂O or H₂O and N₂ are separated and removed in Step (B3). First, H₂O is separated and removed by dehydration, and N₂ is separated and removed when the reformed gas contains N₂ (when ammonia is used as the hydrogen-based reducing agent). When CO₂ which has been not reformed in Step (B2) or unreacted hydrogen-based reducing agent remains in the reformed gas, CO₂ is separated and removed, and the hydrogen-based reducing agent is separated, collected, and sent to Step (B2) to be reused. After CO separated and collected from the mixed gas in Step (B1) is mixed with the reformed gas thus obtained after Step (B3), heat exchange with the reformed gas at a high temperature immediately after Step (B2) is performed to raise the temperature, and the mixed gas is then sent to the air-heating furnace as fuel.

### [Example]

### (1) Examples Relating to Blast Furnace Operating Method

Blast furnace operating conditions before implementing the present invention are as follows.
blast volume: 1112 Nm³/t-p
oxygen enrichment volume: 7.6 Nm³/t-p
blast moisture: 25 g/Nm³
blast temperature: 1150°C
reducing material ratio: 497 kg/t-p (cokes ratio: 387 kg/t-p, pulverizing coal ratio: 110 kg/t-p)
generation amount of blast furnace gas (dry): 1636 Nm³/t-p (nitrogen: 54.0 vol%, CO₂: 21.4 vol%, CO: 21.0 vol%, hydrogen: 3.6 vol%)
CO₂ discharge amount (CO₂ conversion of C supplied to blast furnace): 1539 kg/t-p

### [Example 1]

Based on processing flow as shown in FIG. 12, part of blast furnace gas was reformed and cycled. About 20 vol% of the blast furnace gas produced in the blast furnace gas was introduced into an adsorption column filled with CO₂ adsorbent, and the adsorption column was caused to adsorb CO₂ at an absolute pressure of 200 kPa and then to desorb CO₂ at an absolute pressure of 7 kPa, and CO₂ (CO₂ concentration of 99 vol%) was obtained (hereinafter, CO₂ separate and collected from the blast furnace gas will be referred to as "CO₂ gas x"). The blast furnace gas from which CO₂ has been separated and collected was introduced into the adsorption column filled with CO adsorbent, the adsorption column is caused to adsorb CO at an absolute pressure of 200 kPa and then to desorb CO at an absolute pressure of 7 kPa, and CO (CO concentration of 99 vol%) was obtained (hereinafter, CO separated and collected from the blast furnace gas will be referred to as "CO gas y").

The CO₂ gas x was introduced into a reforming apparatus (reactor), H₂ was added thereto as the hydrogen-based reducing agent (H₂/CO₂: 2 molar ratio), and the CO₂ gas x was reformed (converted) into CO using the Ni-based catalyst under conditions of reaction temperature: 600 °C and SV (Space Velocity): 100h⁻¹. The CO₂ inversion rate was about 55%. The reformed gas was cooled with a heat exchanger, H₂O was removed with a water remover, and the reformed gas was then introduced into an adsorption column to separate (adsorption → desorption) CO (hereinafter, separated CO will be referred to as "CO gas z"). The gas after separating CO was unreacted H₂ which was used again as the hydrogen-based reducing agent for reforming CO₂. After the above CO gas z was mixed with the above CO gas y, the mixed gas was blown from the blast furnace tuyere. In this example, reducing material ratio: 469 kg/t-p (cokes ratio: 359 kg/t-p, pulverizing coal ratio: 110 kg/t-p) and CO₂ discharge amount: 1453 kg/t-p were obtained, and it was possible to reduce the CO₂ discharge amount by about 5.6% as compared with the blast furnace operation conditions before implementing the present invention.

### [Example 2]

The same processing was performed as that in Example 1 except that about 10 vol% of the blast furnace gas produced in the blast furnace was used, and the CO gas was blown from the blast furnace tuyere. In this example, reducing material ratio: 484 kg/t-p (cokes ratio: 374 kg/t-p, pulverizing coal ratio: 110 kg/t-p) and CO₂ discharge amount: 1499 kg/t-p were obtained, and it was possible to reduce the CO₂ discharge amount by about 2.6% as compared with the blast furnace operation conditions before implementing the present invention.

### [Example 3]

The same processing was performed as that in Example 1 except that ammonia was used as the hydrogen-based reducing agent, and the CO gas was blown from the blast furnace tuyere. The CO₂ gas x separated and collected from the blast furnace gas was introduced into a reforming apparatus (reactor), ammonia was added thereto as the hydrogen-based reducing agent (NH₃/CO₂: 1.5 molar ratio), and the CO₂ gas x was reformed (converted) into CO using an Ni-CO-based catalyst under conditions of reaction temperature: 500 °C and SV: 200h⁻¹. The CO₂ inversion rate was about 90%. In this example, reducing material ratio: 469 kg/t-p (cokes ratio: 359 kg/t-p, pulverizing coal ratio: 110 kg/t-p) and CO₂ discharge amount: 1453 kg/t-p were obtained, and it was possible to reduce the CO₂ discharge amount by about 5.6% as compared with the blast furnace operation conditions before implementing the present invention.

### (2) Examples Relating to Blast Furnace Operating Method

### [Example 4]

CO obtained by reforming CO₂ in the same manner as in Example 1 was used as fuel in the air-heating furnace. In an ordinary operation, 1112 Nm³/t-p of hot blast at 1150°C was produced by mixing the blast furnace gas : 493 Nm³/t-p (amount of heat generation: 740 kcal/Nm³) and the cokes furnace gas: 40 Nm³/t (amount of heat generation: 4580 kcal/Nm³) to obtain 533 Nm³/t-p (amount of heat generation: 1028 kcal/Nm³) of mixed gas, combusting the mixed gas at the air-heating furnace to cause the air-heating furnace to store the heat, and supplying air to the air-heating furnace which stores the heat, and the hot blast was sent to the blast furnace. On the other hand, in this example, 1112 Nm³/t-p of hot blast at 1150°C was produced by mixing the CO gas: 75 Nm³/t-p (amount of heat generation: 2950 kcal/Nm³) with the blast furnace gas: 493 Nm³/t-p (amount of heat generation: 740 kcal/Nm³) instead of the above cokes furnace gas to obtain mixed gas of 568 Nm³/t-p (1032 kcal/Nm³) and combusting the mixed gas at the air-heating furnace, and the hot blast was sent to the blast furnace. As a result, it was possible to reduce 40 m³/t-p of the cokes furnace gas which was used in the ordinary operation and to use the reduced cokes furnace gas in the heating furnace in the plant.

### Utilization Method of Carbon Oxide-Containing Gas

A utilization method of carbon oxide-containing gas according to an embodiment of the present invention is a utilization method of carbon oxide-containing gas (mixed gas containing CO₂ or CO₂ and CO) produced in steel industry or other industries, and more specifically, a utilization method of carbon oxide-containing gas in which CO₂ is substantially reduced by separating and collecting carbon oxide (CO₂ or CO₂ and CO) from the carbon oxide-containing gas generated in the steel industry or other industries, reducing CO₂ in the carbon oxide to obtain CO, and reusing obtained CO in the blast furnace.

That is, the utilization method of carbon oxide-containing gas according to an embodiment of the present invention is a method in which blast furnace gas and converter furnace gas, which are examples of the carbon oxide-containing gas (mixed gas containing CO₂ or CO₂ and CO), produced in the step of manufacturing iron are collected, gas containing carbon oxide at concentration (total concentration of CO₂ and CO) of 80% or higher is separated, CO₂ in the separated gas (the gas containing CO₂ and CO at the total concentration of 80% or higher) is reduced with a reducing agent and then converted into gas containing CO and hydrogen as main components, and obtained CO and hydrogen are reused in the blast furnace. In the case where the carbon oxide concentration of the collected carbon oxide-containing gas is less than 80%, as a larger reactor is required and sensible heat of other components has a greater influence in the reduction step which is a subsequent step, it is not economical.

According to the utilization method of carbon oxide-containing gas according to an embodiment of the present invention, while it is not necessary to limit the carbon oxide-containing gas (mixed gas containing CO₂ or CO₂ and CO) as a raw material to gas produced in the step of manufacturing iron, it is desirable that the oxygen concentration thereof be 5% or less due to a subsequent step for reducing the gas with a reducing agent (hydrocarbon-based reducing agent). This is because more reducing agent is consumed in combustion when the oxygen concentration is higher than 5%. As a method of separating and collecting carbon oxide (CO₂ or CO₂ and CO) from the carbon oxide-containing gas (mixed gas containing CO₂ or CO₂ and CO) as a raw material, various known methods can be utilized. That is, a method of separating and collecting CO after separating and collecting CO₂, a method of separating and collecting CO₂ after separating and collecting CO in the opposite order, and further a method of separating and collecting CO₂ and CO at the same time can be exemplified.

As a method of separating and collecting CO₂, any of known methods including a method (adsorption and separation method) of separating and collecting CO₂ by causing activated carbon or zeolite to adsorb the mixed gas and then heating or depressurizing the activated carbon or zeolite, a method of liquefying or solidifying CO₂ by pressurizing or cooling the mixed gas, a method of separating and collecting CO₂ by causing caustic soda or amine, which is an example of basic aqueous solution, to absorb the mixed gas and heating or depressurizing the mixed gas, a method of separating and collecting CO₂ with a co₂ separating film, and a method of separating and collecting CO₂ by causing barium titanate which is an example of solid carbon dioxide gas absorbent to absorb the mixed gas and heating and depressurizing the mixed gas can be employed. Among the above, it is particularly preferable to use an adsorption and separation method, which has less influence on the subsequent step and has been technically well-established.

As a method of separating and collecting CO, any of known methods including a method of separating and collecting CO by causing copper/activated carbon, copper/alumina, or copper/zeolite which is an example of CO adsorbent to adsorb the mixed gas and heating and depressurizing the mixed gas (adsorption and separation method) and a method of separating and collecting CO by causing CO absorbing solution containing copper as a main component to absorb the mixed gas and heating or depressurizing the mixed gas. Among the above, it is particularly preferable to use the adsorption and separation method, which has less influence on the subsequent step and has been technically well-established.

The method of separating and collecting CO₂ and the method of separating and collecting CO may be performed at the same time or in a composite fashion to separate CO₂ and CO at the same time.

A known method can be used as a method of reducing CO₂ in the carbon oxide separated and collected as described above to obtain CO. Dry reforming using methane as represented by the following Formula (10) as a reducing agent can be exemplified. According to the dry reforming method using methane as the reducing agent, a reaction proceeds at 700 to 900°C when a catalyst is used, and the reaction thermally proceeds at a high temperature exceeding 1000°C. A higher temperature is more preferable when the gas is blown into the blast furnace, either the method of using a catalyst or the method of thermally causing the reaction to proceed can be used, and it is preferable that the gas can be introduced as it is without any need to cool down the gas after the reaction. Although it is necessary to add external heat in order to cause the reaction at a high temperature as described above, it is also possible to use unused sensible heat of blast furnace slag or converter furnace slag, and it is desirable in view of that unnecessary carbon dioxide gas is not generated in heating.

CO₂ + CH₄ → 2CO + 2H₂ (10)

According to the dry reforming method, it is not necessary to limit the used reducing agent to methane, Liquefied Petroleum Gas (LPG), which is an example of hydrocarbon, methanol, which is an example of alcohols, dimethyl ether (DME) which is an example of ethers, aldehydes, or ketones can be used. A reaction formula of CO₂ reduction when LPG is used as the reducing agent is represented as the following Formula (11), and a reaction formula of CO₂ reduction when DME is used as the reducing agent is represented as the following Formula (12).

3CO₂ + C₃H₈ → 6CO + 4H₂ (11)

CO₂ + (CH₃) ₂O → 3CO + 3H₂ (12)

When gas with CO (CO obtained by being separated from the carbon oxide-containing gas and CO obtained by reducing CO₂ separated from the carbon oxide-containing gas) concentration of 80% or higher is obtained by separating and collecting carbon oxide from the carbon oxide-containing gas and reducing CO₂ in the separated and collected carbon oxide as described above, reduction may be performed after mixing CO₂ and CO which have been independently separated and collected, or mixing with CO which has been separately separated and collected may be performed after reducing CO₂. CO₂ and CO may be separated and collected at the same time and then reduced. For the reaction between CO₂ and the reducing agent, it is preferable to set a condition that the CO₂ inversion rate is 50% or higher, and particularly preferable that the CO₂ inversion rate is set to 70% or higher.

The above reaction between CO₂ and methane, LPG, or DME, which is an example of the reducing agent, is an endothermic reaction. Therefore, it is necessary to add external heat in order to cause the reaction to proceed. On the other hand, unused waste heat is present in some cases in steelworks or a chemical plant. Thus, in an embodiment of the present invention, such waste heat may be used as a part of or entire heat source for causing the endothermic reaction to proceed. Specifically, sensible heat of blast furnace slag and converter furnace slag in the steelworks and sensible heat of red-hot cokes can be exemplified. In addition, a position at which the gas containing CO at a concentration of 80% or higher is introduced into the blast furnace may be in the vicinity of the blast furnace tuyere or in the upper part of the blast furnace.

According to this embodiment, it is possible to effectively reuse the carbon oxide-containing gas (mixed gas containing CO₂ or CO₂ and CO) and to substantially suppress CO₂. A part of or the entire hydrogen obtained by reducing CO₂ may be used for another purpose without being introduced into the blast furnace. When the carbon oxide-containing gas does not contain CO, the aforementioned separation and collection of CO are not performed. This holds in the case in which, for example, the CO content is small even when the carbon oxide-containing gas contains CO.

### [Example 1]

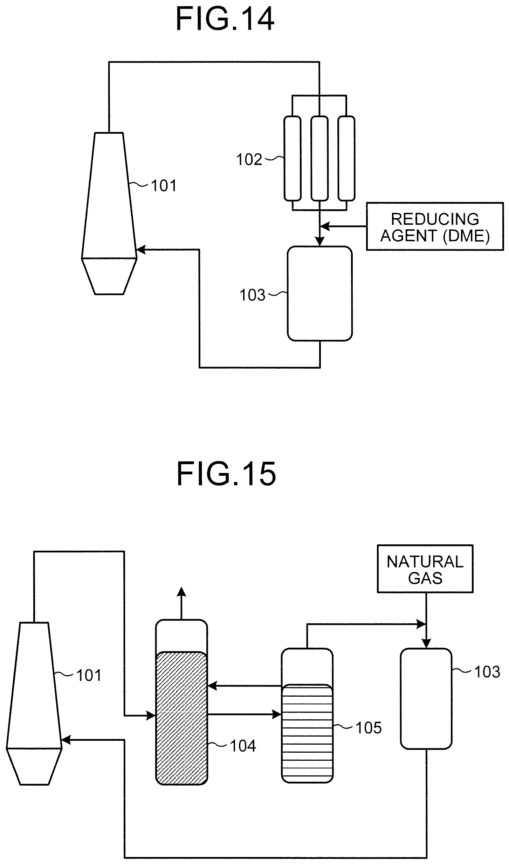

FIG. 14 shows Example 1 (Inventive Example 1) of the utilization method of carbon oxide-containing gas according to an embodiment of the present invention. In Inventive Example 1, an adsorption column (PSA unit) 102 filled with adsorbent obtained by mixing carbon dioxide adsorbent and carbon monoxide adsorbent was caused to adsorb the blast furnace gas (nitrogen: 52%, carbon dioxide: 22%, carbon monoxide: 23%, hydrogen: 3%) generated in a blast furnace 101 at an absolute pressure of 200 kPa and then desorb the blast furnace gas at an absolute pressure of 7 kPa, and gas containing CO₂ and CO at a total concentration of 99% was obtained, as shown in FIG. 14. When the mixed gas of CO₂ and CO was mixed with a same amount of DME (reducing agent) as that of CO₂, and a reforming reaction is caused in a reforming reactor 103 in the presence of a copper-based catalyst under ordinary pressure at 280°C, 90% of CO₂ is transformed, and the CO concentration of the carbon oxide produced in the reforming reaction became 95%. The CO and hydrogen concentrations in all products were 49% and 47%, respectively. This was introduced into the blast furnace tuyere as it is. As a result, it was confirmed that it was possible to effectively reuse the carbon oxide-containing gas (blast furnace gas) and to substantially suppress CO₂ according to the present invention.

### [Example 2]

FIG. 15 shows Example 2 (Inventive Example 2) of the utilization method of carbon oxide-containing gas according to an embodiment of the present invention. In Inventive Example 2, the blast furnace gas (nitrogen: 52%, carbon dioxide: 22%, carbon monoxide: 23%, hydrogen: 3%) generated in a blast furnace 101 was caused to circulate in an absorption column 104 containing MEA (monoethanolamine) aqueous solution maintained at 30°C, and MEA aqueous solution was caused to absorb CO₂, as shown in FIG. 15. The MEA aqueous solution absorbing CO₂ was heated to 100°C in a collection column 105 to release CO₂, and water is condensed by cooling the generated gas to collect CO₂. The purity of CO₂ was 99%. The CO₂ was mixed with natural gas containing methane as a main component, and a reforming reaction was caused in the presence of a nickel-based catalyst at 900°C. As a result, 98% of CO₂ was reacted, and both concentrations of CO and hydrogen in the product became 49%. This was introduced as it is into the blast furnace tuyere. In so doing, it was confirmed that it was possible to effectively reuse the carbon oxide-containing gas (blast furnace gas) and to substantially suppress CO₂ according to the present invention.

### [Example 3]

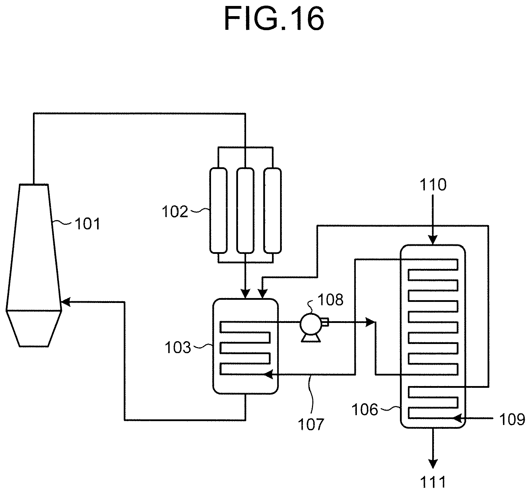

FIG. 16 shows Example 3 (Inventive Example 3) of the utilization method of carbon oxide-containing gas according to an embodiment of the present invention. In Inventive Example 3, blast furnace slag 110 at a high temperature was used as a heat source for the reforming reactor 103 in the aforementioned Inventive Example 1, as shown in FIG. 16. The other parts of the utilization method were performed in the same manner as in Inventive Example 1. The blast furnace slag 110 at a high temperature heated a heat carrier and further heated dimethyl ether 109 in a slag sensible heat recovery apparatus 106, and became blast furnace slag 111 at a low temperature. Dimethyl ether 109 heated in the slag sensible heat recovery apparatus 106 is sent to the reforming reactor 103. On the other hand, the heated heat carrier was set to the reforming reactor 103 via a heat carrier circulating line 107, cooled down by supplying the reaction heat for an endothermic reaction in which the carbon dioxide gas and dimethyl ether were reformed to CO and hydrogen, and sent again to the slag sensible heat recovery apparatus 106 by a heat carrier circulating pump 108. When the test was performed under the same conditions as those in Inventive Example 1, 88% of CO₂ was transformed, and the CO concentration of the carbon oxide generated in the reforming reaction was 93%. The concentrations of CO and hydrogen in the entire products were 48% and 46%, respectively. This was introduced as it is into the blast furnace tuyere. In so doing, it was confirmed that it was possible to effectively reuse the carbon oxide-containing gas (blast furnace gas or the like) and to substantially suppress CO₂ according to the present invention.

Although the above description was given of embodiments to which the present invention made by the present inventor was applied, the present invention is not limited to a description and a drawing according to the embodiments, which are parts of disclosure of the present invention. Other embodiments, examples, and operation techniques made by those skilled in the art based on the embodiments as described above are all included in the scope of the claims of the present invention.

### Industrial Applicability

The present invention can be applied to a blast furnace operating method of reforming CO₂ and/or CO separated and collected from mixed gas containing CO₂ and/or CO and using CO₂ and/or CO as a heat source (fuel) or a reducing agent in the blast furnace, a steelworks operating method of reforming CO₂ and/or CO separated and collected from mixed gas containing CO₂ and/or CO and using CO₂ and/or CO as a heat source (fuel) or a reducing agent in the steelworks, and a utilization method of carbon oxide-containing gas (mixed gas containing CO₂ or CO₂ and

### CO) .

### Reference Signs List

1 REACTOR
2, 2a, 2b HEAT EXCHANGER
3 CATALYST
4 GAS FLOW PATH
5 HEAT CARRIER FLOW PATH
6, 6a REACTOR FOR PRODUCING HYDROGEN
7 HEAT EXCHANGER
8 FLOW PATH OF RAW MATERIAL FOR PRODUCING HYDROGEN
9 STEAM DRUM
10 REACTOR FOR PRODUCING HYDROGEN
11 STEAM TURBINE
12 HYDROGEN SEPARATING APPARATUS
13 PUMP
14 FLOW PATH OF PRODUCT OBTAINED BY DEHYDROGENATING ORGANIC HYDRIDE
15 BACK PRESSURE VALVE
16 FLOW PATH OF PRODUCT OBTAINED BY DEHYDROGENATING ORGANIC HYDRIDE AFTER SEPARATING HYDROGEN
101 BLAST FURNACE
102 PSA UNIT
103 REFORMING REACTOR
104 ABSORPTION COLUMN
105 COLLECTION COLUMN
106 SLAG SENSIBLE HEAT RECOVERY APPARATUS
107 HEAT CARRIER CIRCULATING LINE
108 HEAT CARRIER CIRCULATING PUMP
109 DIMETHYL ETHER
110 BLAST FURNACE SLAG (HIGH TEMPERATURE)
111 BLAST FURNACE SLAG (LOW TEMPERATURE)

## Claims

1. A blast furnace or steelworks operating method comprising:
Step (A1) for separating and collecting CO₂ and/or CO from mixed gas containing CO₂ and/or CO;
Step (A2) for adding hydrogen to CO₂ and/or CO separated and collected in Step (A1) and converting CO₂ and/or CO into CH₄, wherein the amount of hydrogen is in a stoichiometric proportion with respect to CO₂ and/or CO to range from 1 to 1.2;
Step (A3) for separating and removing H₂O from gas obtained after Step (A2); and
Step (A5) for producing hydrogen by using reaction heat generated in Step (A2),
wherein
an outlet temperature of a methanation reactor is set to 400 to 500 °C, and
gas obtained after Step (A3) is:
blown, as a reducing agent, into a blast furnace; or
used as fuel in a facility of steelworks.

2. The blast furnace or steelworks operating method according to claim 1,
wherein Step (A3) further includes a step for separating and removing or separating and collecting the following (i) and/or (ii) from the gas obtained after Step (A2):
(i) CO₂ and/or CO remaining without being reformed in Step (A2),
(ii) hydrogen remaining without being consumed in Step (A2).

3. The blast furnace or steelworks operating method according to claim 1 or 2,
wherein at least a part of hydrogen produced in Step (A5) is used in Step (A2).

4. The blast furnace or steelworks operating method according to claim 3, wherein
Step (A5) includes a step for producing hydrogen by a dehydrogenation reaction of hydride of a monoaromatic compound and/or polyaromatic compound and using reaction heat, which is generated in Step (A2), as a heat source for the dehydrogenation reaction, under a higher reaction pressure than a reaction pressure for a methanation reaction in Step (A2),
the reaction pressure for the dehydrogenation reaction in Step (A5) is maintained with a pressure for supplying hydride of the monoaromatic compound and/or polyaromatic compound to the reactor, and
hydrogen produced in Step (A5) is supplied to Step (A2) without further raising the pressure.

5. The blast furnace or steelworks operating method according to claim 3,
wherein Step (A5) includes a step for producing hydrogen by water vapor reforming of hydrocarbon and using the reaction heat, which is generated in Step (A2), as a heat source for preheating hydrocarbon.

6. The blast furnace or steelworks operating method according to claim 3,
wherein Step (A5) includes a step for producing hydrogen by water vapor reforming of hydrocarbon, generating water vapor with the reaction heat which is generated in Step (A2), and using the water vapor as water vapor for a reforming reaction.

7. The blast furnace or steelworks operating method according to claim 3,
wherein Step (A5) includes a step for generating vapor with the reaction heat which is generated in Step (A2), generating electric power with the vapor, and producing hydrogen by electrodepositing water with the electric power.

8. The blast furnace or steelworks operating method according to claim 3,
wherein Step (A5) includes a step for generating vapor with the reaction heat which is generated in Step (A2), generating electric power with the vapor, and separating hydrogen from hydrogen-containing gas based on a PSA method using the electric power.

## Patentansprüche

1. Betriebsverfahren für einen Hochofen oder ein Stahlwerk, umfassend:
Schritt (A1) zum Abtrennen und Auffangen von CO₂ und/oder CO aus Mischgas, das CO₂ und/oder CO enthält;
Schritt (A2) zum Zugeben von Wasserstoff zu CO₂ und/oder CO, das in Schritt (A1) abgetrennt und aufgefangen wird, und Umwandeln von CO₂ und/oder CO in CH4, wobei die Menge an Wasserstoff in einem stöchiometrischen Verhältnis bezüglich CO₂ und/oder CO ist, das sich im Bereich von 1 bis 1,2 befinden soll;
Schritt (A3) zum Abtrennen und Entfernen von H₂O aus Gas, das nach Schritt (A2) erhalten wird und
Schritt (A5) zum Herstellen von Wasserstoff durch Benutzen der Reaktionswärme, die in Schritt (A2) erzeugt wird,
wobei
eine Auslasstemperatur eines Methanisierungsreaktors auf 400 bis 500 °C eingestellt wird und Gas, das nach Schritt (A3) gewonnen wird,
als Reduktionsmittel in einen Hochofen eingeblasen wird; oder
als Brennstoff in einer Anlage eines Stahlwerks benutzt wird.

2. Betriebsverfahren für einen Hochofen oder ein Stahlwerk nach Anspruch 1, wobei Schritt (A3) ferner einen Schritt zum Abtrennen und Entfernen oder Abtrennen und Auffangen der folgenden (i) und/oder (ii) aus dem Gas, das nach Schritt (A2) gewonnen wird, beinhaltet:
(i) CO₂ und/oder CO, das verbleibt, ohne in Schritt (A2) reformiert zu werden,
(ii) Wasserstoff, der verbleibt, ohne in Schritt (A2) verbraucht zu werden.

3. Betriebsverfahren für einen Hochofen oder ein Stahlwerk nach Anspruch 1 oder 2, wobei mindestens ein Teil des Wasserstoffs, der in Schritt (A5) hergestellt wird, in Schritt (A2) benutzt wird.

4. Betriebsverfahren für einen Hochofen oder ein Stahlwerk nach Anspruch 3, wobei Schritt (A5) einen Schritt zum Herstellen von Wasserstoff durch eine Dehydrierungsreaktion von Hydrid einer monoaromatischen Verbindung und/oder einer polyaromatischen Verbindung und unter Benutzen von Reaktionswärme, die in Schritt (A2) erzeugt wird, als einer Wärmequelle für die Dehydrierungsreaktion unter einem höheren Reaktionsdruck als einem Reaktionsdruck für eine Methanisierungsreaktion in Schritt (A2) beinhaltet,
wobei der Reaktionsdruck für die Dehydrierungsreaktion in Schritt (A5) mit einem Druck zum Zuführen von Hydrid der monoaromatischen Verbindung und/oder polyaromatischen Verbindung zu dem Reaktor aufrechterhalten wird und
Wasserstoff, der in Schritt (A5) hergestellt wird, ohne weiteres Erhöhen des Drucks Schritt (A2) zugeführt wird.

5. Betriebsverfahren für einen Hochofen oder ein Stahlwerk nach Anspruch 3, wobei Schritt (A5) einen Schritt zum Herstellen von Wasserstoff durch Wasserdampfreformieren von Kohlenwasserstoff und Benutzen der Reaktionswärme, die in Schritt (A2) erzeugt wird, als einer Wärmequelle zum Vorheizen von Kohlenwasserstoff beinhaltet.

6. Betriebsverfahren für einen Hochofen oder ein Stahlwerk nach Anspruch 3, wobei Schritt (A5) einen Schritt zum Herstellen von Wasserstoff durch Wasserdampfreformieren von Kohlenwasserstoff, wobei Wasserdampf mit der Reaktionswärme erzeugt wird, die in Schritt (A2) erzeugt wird, und der Wasserdampf als Wasserdampf für eine Reformierungsreaktion benutzt wird, beinhaltet.

7. Betriebsverfahren für einen Hochofen oder ein Stahlwerk nach Anspruch 3, wobei Schritt (A5) einen Schritt zum Erzeugen von Dampf mit der Reaktionswärme, die in Schritt (A2) erzeugt wird, wobei mit dem Dampf elektrische Energie erzeugt wird und Wasserstoff durch elektrolytisches Abscheiden von Wasser mit der elektrischen Energie hergestellt wird, beinhaltet.

8. Betriebsverfahren für einen Hochofen oder ein Stahlwerk nach Anspruch 3, wobei Schritt (A5) einen Schritt zum Erzeugen von Dampf mit der Reaktionswärme, die in Schritt (A2) erzeugt wird, wobei mit dem Dampf elektrische Energie erzeugt wird und Wasserstoff aus wasserstoffhaltigem Gas auf Grundlage eines PSA-Verfahrens unter Benutzen der elektrischen Energie abgetrennt wird, beinhaltet.

## Revendications

1. Procédé d'exploitation d'un haut-fourneau ou d'une aciérie comprenant :
l'Étape (A1) pour séparer et récupérer le CO₂ et/ou le CO à partir d'un gaz mixte contenant du CO₂ et/ou du CO ;
l'Étape (A2) pour ajouter de l'hydrogène au CO₂ et/ou au CO séparé et récupéré à l'Étape (A1) et convertir le CO₂ et/ou le CO en CH₄, dans lequel la quantité d'hydrogène est en une proportion stoechiométrique par rapport au CO₂ et/ou au CO pour se situer dans la plage de 1 à 1,2 ;
l'Étape (A3) pour séparer et retirer l'H₂O du gaz obtenu après l'Étape (A2) ; et
l'Étape (A5) pour produire de l'hydrogène en utilisant la chaleur de réaction générée à l'Étape (A2), dans lequel une température de sortie d'un réacteur de méthanation est fixée entre 400 et 500 °C, et
le gaz obtenu après l'Étape (A3) est :
soufflé, en tant qu'agent réducteur, dans un haut-fourneau ; ou
utilisé comme combustible dans une installation ou une aciérie.

2. Procédé d'exploitation d'un haut-fourneau ou d'une aciérie selon la revendication 1,
dans lequel l'Étape (A3) comprend en outre une étape pour séparer et retirer ou séparer et récupérer les (i) et/ou (ii) suivants du gaz obtenu après l'Étape (A2) :
(i) le CO₂ et/ou le CO résiduel sans être reformé à l'Étape (A2),
(ii) l'hydrogène résiduel sans être consommé à l'Étape (A2).

3. Procédé d'exploitation d'un haut-fourneau ou d'une aciérie selon la revendication 1 ou 2,
dans lequel au moins une partie de l'hydrogène produit à l'Étape (A5) est utilisée à l'Étape (A2).

4. Procédé d'exploitation d'un haut-fourneau ou d'une aciérie selon la revendication 3, dans lequel
l'Étape (A5) comprend une étape pour produire de l'hydrogène par une réaction de déshydrogénation de l'hydrure d'un composé monoaromatique et/ou d'un composé polyaromatique en utilisant la chaleur de réaction, qui est générée à l'Étape (A2), comme source de chaleur pour la réaction de déshydrogénation, sous une pression de réaction plus élevée qu'une pression de réaction pour une réaction de méthanation à l'Étape (A2),
la pression de réaction pour la réaction de déshydrogénation à l'Étape (A5) est maintenue par une pression à laquelle l'hydrure du composé monoaromatique et/ou du composé polyaromatique est fourni au réacteur, et
l'hydrogène produit à l'Étape (A5) est fourni à l'Étape (A2) sans élever davantage la pression.

5. Procédé d'exploitation d'un haut-fourneau ou d'une aciérie selon la revendication 3,
dans lequel l'Étape (A5) comprend une étape pour produire de l'hydrogène par reformage d'hydrocarbure à la vapeur d'eau en utilisant la chaleur de réaction, qui est générée à l'Étape (A2), comme source de chaleur pour préchauffer l'hydrocarbure.

6. Procédé d'exploitation d'un haut-fourneau ou d'une aciérie selon la revendication 3,
dans lequel l'Étape (A5) comprend une étape pour produire de l'hydrogène par reformage d'hydrocarbure à la vapeur d'eau, en générant de la vapeur d'eau à l'aide de la chaleur de réaction qui est générée à l'Étape (A2), et en utilisant la vapeur d'eau comme vapeur d'eau pour une réaction de reformage.

7. Procédé d'exploitation d'un haut-fourneau ou d'une aciérie selon la revendication 3 ;
dans lequel l'Étape (A5) comprend une étape pour générer de la vapeur à l'aide de la chaleur de réaction qui est générée à l'Étape (A2), en générant de l'énergie électrique à l'aide de la vapeur, et en produisant de l'hydrogène par électrodéposition de l'eau à l'aide de l'énergie électrique.

8. Procédé d'exploitation d'un haut-fourneau ou d'une aciérie selon la revendication 3,
dans lequel l'Étape (A5) comprend une étape pour générer de la vapeur à l'aide de la chaleur de réaction qui est générée à l'Étape (A2), en générant de l'énergie électrique à l'aide de la vapeur, et en séparant l'hydrogène du gaz contenant de l'hydrogène sur la base d'un procédé PSA (adsorption à pression modulée) à l'aide de l'énergie électrique.
